# EUROPEAN PATENT APPLICATION

(11) **EP 4 751 843 A1**
(43) Date of publication of application: **03.06.2026**
(21) Application number: 23946714.5
(22) Date of filing: 27.07.2023
(51) Int. Cl.: B23Q 17/09, B23Q 17/00, G05B 19/406

(54) **PROCESSING SYSTEM, PROCESSING DEVICE, PROCESSING METHOD, AND PROCESSING PROGRAM**

(71) Applicant: Sumitomo Electric Industries, Ltd., Osaka-shi, Osaka 541-0041 (JP); Sumitomo Electric Hardmetal Corp., Itami-shi, Hyogo 664-0016 (JP)
(72) Inventor: KOIKE, Yusuke, Osaka-shi, Osaka 541-0041 (JP); KOSAI, Koji, Osaka-shi, Osaka 541-0041 (JP); TSUCHIYA, Kazuma, Itami-shi, Hyogo 664-0016 (JP)
(74) Representative: Boult Wade Tennant LLP
(86) International application number: PCT/JP2023/027493
(87) International publication number: WO 2025/022632

(57) **Abstract**

A processing system includes: a cutting tool; a sensor; and a processing unit. The sensor measures a physical quantity indicating a state regarding loading on the cutting tool during a cutting process. Based on measurement results from the sensor at a plurality of measurement time points, the processing unit creates a graph including a plurality of plots each indicating data regarding the loading at a corresponding one of the measurement time points, and detects a state of the cutting process using the cutting tool, based on an area occupied by the plurality of plots in the created graph.

## Description

### TECHNICAL FIELD

The present disclosure relates to a processing system, a processing device, a processing method, and a processing program.

### BACKGROUND ART

PATENT LITERATURE 1 (US Patent Application Publication No. 2015/0261207) discloses a method as below. That is, a method for setting or monitoring operation parameters of a workpiece processing machine, the workpiece processing machine having a tool holder and means for moving a workpiece and the tool holder relative to each other at least along a first axis, wherein,
during processing operation of the tool holder to which a workpiece is mounted, and during application of the tool to a workpiece, values for at least one of the following measured variables (a) to (c) occurring on the tool during interaction between the tool and the workpiece and transmitted to the tool holder are detected, and are recorded for the machining sequence,
   (a) an axial force acting in a direction parallel to the first axis,
   (b) a torque present relative to the first axis or to an axis parallel to the first axis, and
   (c) bending torques or bending torque components according to direction and amount, and
ascertained values for the at least one measured variable are used, in order to: set operating parameters with respect to an extended service life of the tool used, in conjunction with a processing time period falling below a maximum machining time period; monitor processing operation with respect to a reproducibility of the same; or monitor a tool wear or a machine error of the workpiece processing machine.

### CITATION LIST

### [PATENT LITERATURE]

PATENT LITERATURE 1: US Patent Application Publication No. 2015/0261207
PATENT LITERATURE 2: Japanese Laid-Open Patent Publication No. 2006-71485
PATENT LITERATURE 3: Japanese Laid-Open Patent Publication No. H11-118625

### SUMMARY OF THE INVENTION

A processing system of the present disclosure includes: a cutting tool; a sensor; and a processing unit. The sensor measures a physical quantity indicating a state regarding loading on the cutting tool during a cutting process. Based on measurement results from the sensor at a plurality of measurement time points, the processing unit creates a graph including a plurality of plots each indicating data regarding the loading at a corresponding one of the measurement time points, and detects a state of the cutting process using the cutting tool, based on an area occupied by the plurality of plots in the created graph.

An aspect of the present disclosure can be realized not only as a processing system having such a characteristic processing unit, but also as a semiconductor integrated circuit that realizes a part or the entirety of the processing system.

### BRIEF DESCRIPTION OF DRAWINGS

[FIG. 1] FIG. 1 shows a configuration of a processing system according to an embodiment of the present disclosure.
[FIG. 2] FIG. 2 is a cross-sectional view showing a configuration of a cutting tool according to the embodiment of the present disclosure.
[FIG. 3] FIG. 3 shows a configuration of a processing device in a cutting system according to the embodiment of the present disclosure.
[FIG. 4] FIG. 4 is a perspective view schematically showing the cutting tool according to the embodiment of the present disclosure.
[FIG. 5] FIG. 5 shows an example of a graph created by a creation unit in the processing device according to the embodiment of the present disclosure.
[FIG. 6] FIG. 6 shows an example of a graph created by the creation unit in the processing device according to the embodiment of the present disclosure.
[FIG. 7] FIG. 7 shows an example of a graph created by the creation unit in the processing device according to the embodiment of the present disclosure.
[FIG. 8] FIG. 8 shows an example of a graph created by the creation unit in the processing device according to the embodiment of the present disclosure.
[FIG. 9] FIG. 9 shows an example of a graph created by the creation unit in the processing device according to the embodiment of the present disclosure.
[FIG. 10] FIG. 10 shows an example of a graph created by the creation unit in the processing device according to the embodiment of the present disclosure.
[FIG. 11] FIG. 11 shows another example of a graph created by the creation unit in the processing device according to the embodiment of the present disclosure.
[FIG. 12] FIG. 12 shows another example of a graph created by the creation unit in the processing device according to the embodiment of the present disclosure.
[FIG. 13] FIG. 13 shows another example of a graph created by the creation unit in the processing device according to the embodiment of the present disclosure.
[FIG. 14] FIG. 14 shows another example of a graph created by the creation unit in the processing device according to the embodiment of the present disclosure.
[FIG. 15] FIG. 15 shows an example of a detection process performed by a detection unit in the processing device according to the embodiment of the present disclosure.
[FIG. 16] FIG. 16 shows a simulation result for describing accuracy of detection of abnormal vibration performed in the processing device according to the embodiment of the present disclosure.
[FIG. 17] FIG. 17 shows a simulation result for describing accuracy of detection of abnormal vibration performed in the processing device according to the embodiment of the present disclosure.
[FIG. 18] FIG. 18 shows a simulation result for describing accuracy of detection of abnormal vibration performed in the processing device according to the embodiment of the present disclosure.
[FIG. 19] FIG. 19 shows a simulation result for describing accuracy of detection of abnormal vibration performed in the processing device according to the embodiment of the present disclosure.
[FIG. 20] FIG. 20 shows a simulation result for describing accuracy of detection of abnormal vibration performed in the processing device according to the embodiment of the present disclosure.
[FIG. 21] FIG. 21 shows a simulation result for describing accuracy of detection of abnormal vibration performed in the processing device according to the embodiment of the present disclosure.
[FIG. 22] FIG. 22 shows a simulation result for describing accuracy of detection of abnormal vibration performed in the processing device according to the embodiment of the present disclosure.
[FIG. 23] FIG. 23 shows a simulation result for describing accuracy of detection of abnormal vibration performed in the processing device according to the embodiment of the present disclosure.
[FIG. 24] FIG. 24 shows a simulation result for describing accuracy of detection of abnormal vibration performed in the processing device according to the embodiment of the present disclosure.
[FIG. 25] FIG. 25 is a schematic diagram of a graph created by the creation unit in the processing device according to the embodiment of the present disclosure.
[FIG. 26] FIG. 26 is a schematic diagram showing a positional relationship between plots on a graph created by the creation unit in the processing device according to the embodiment of the present disclosure.
[FIG. 27] FIG. 27 is a schematic diagram showing a positional relationship between plots on a graph created by the creation unit in the processing device according to the embodiment of the present disclosure.
[FIG. 28] FIG. 28 shows a simulation result for describing a relationship between the detection accuracy and the pitch of plots included in a graph created by the processing device according to the embodiment of the present disclosure.
[FIG. 29] FIG. 29 shows a simulation result for describing a relationship between the detection accuracy and the pitch of plots included in a graph created by the processing device according to the embodiment of the present disclosure.
[FIG. 30] FIG. 30 shows a simulation result for describing a relationship between the detection accuracy and the pitch of plots included in a graph created by the processing device according to the embodiment of the present disclosure.
[FIG. 31] FIG. 31 is a flowchart of an example of the operation procedure when the processing device acquires sensor measurement values according to the embodiment of the present disclosure.
[FIG. 32] FIG. 32 is a flowchart of an example of the operation procedure when the processing device performs the detection process according to the embodiment of the present disclosure.
[FIG. 33] FIG. 33 shows a configuration of a processing system according to a modification of the embodiment of the present disclosure.
[FIG. 34] FIG. 34 shows an example of a graph created by the creation unit in the processing device according to the embodiment of the present disclosure.
[FIG. 35] FIG. 35 shows an example of a graph created by the creation unit in the processing device according to the embodiment of the present disclosure.

### DETAILED DESCRIPTION

To date, a technology in which a sensor is mounted to a cutting tool and an abnormality in a cutting edge of the cutting tool is detected based on a measurement result from the sensor during a cutting process has been proposed.

### [Problems to be solved by the present disclosure]

Beyond the technology of PATENT LITERATURE 1, a technology that can more accurately detect the state of a cutting process using a cutting tool is desired.

The present disclosure has been made in order to solve the above-described problem. An object of the present disclosure is to provide a processing system, a processing device, a processing method, and a processing program that can more accurately detect the state of a cutting process using a cutting tool.

### [Effects of the present disclosure]

The state of a cutting process using a cutting tool can be more accurately detected.

### [Description of embodiment of the present disclosure]

First, contents of an embodiment of the present disclosure are listed and described.

(1) A processing system according to the embodiment of the present disclosure includes: a cutting tool; a sensor; and a processing unit. The sensor measures a physical quantity indicating a state regarding loading on the cutting tool during a cutting process. Based on measurement results from the sensor at a plurality of measurement time points, the processing unit creates a graph including a plurality of plots each indicating data regarding the loading at a corresponding one of the measurement time points, and detects a state of the cutting process using the cutting tool, based on an area occupied by the plurality of plots in the created graph.

Thus, with the configuration in which the state of a cutting process is detected based on the area occupied by the plurality of plots in the graph created based on measurement results from the sensor, change in the positions of the plots due to occurrence of abnormal vibration can be detected as change in the area occupied by the plurality of plots in the graph, whereby abnormal vibration can be detected based on the change in the area. In the area occupied by the plurality of plots in the graph, change in the amplitude of abnormal vibration is easily reflected as compared with the standard deviation or the like of measurement results from the sensor, and thus, change in the amplitude of the abnormal vibration can be detected with higher sensitivity by using the area as an evaluation value. Therefore, the state of a cutting process using the cutting tool can be more accurately detected.

(2) In (1) above, the processing unit may create the graph in which a size of the plot is set in accordance with a pitch of the plot.

With this configuration, it is possible to create a graph in which change in the amplitude of abnormal vibration can be easily reflected by the area occupied by the plurality of plots.

(3) In (2) above, the processing unit may create the graph including the plots having a diameter being 5% or more of a maximum value of the data based on measurement results from the sensor acquired in advance before operation of the processing system, the diameter being 20% or less of the maximum value of the data.

With this configuration, it is possible to ensure the region where the plots overlap in a state where no abnormal vibration has occurred, and when abnormal vibration has occurred, overlapping of the plots is more assuredly reduced without the plots protruding from the graph. Therefore, abnormal vibration can be detected with higher sensitivity by using the area occupied by the plurality of plots as the evaluation value.

(4) In any one of (1) to (3) above, the processing unit may create the graph, based on measurement results from the sensor at the plurality of measurement time points in a period necessary for the cutting tool or a workpiece to rotate a plurality of times.

With this configuration, while the sampling cycle for acquiring the measurement results from the sensor is suppressed at a low level, measurement results necessary for creation of the graph can be acquired.

(5) In any one of (1) to (4) above, the processing unit may create a plurality of the graphs respectively having different sizes of the plot.

With this configuration, a plurality of graphs according to the usage such as a graph for analysis, a graph for display, and the like, can be created.

(6) In (5) above, the processing unit may perform a process of selectively displaying at least one of the plurality of graphs.

With this configuration, for example, while detection of the state of a cutting process is performed by using a graph for analysis, a graph for display that allows a user to recognize the state of the cutting process can be displayed.

(7) In (5) or (6) above, the processing unit may detect the state of the cutting process using the cutting tool, based on an area occupied by the plurality of plots in each of the plurality of graphs.

With this configuration, for example, various abnormal vibrations whose amplitudes are different can be detected with higher sensitivity.

(8) In any one of (1) to (7) above, the processing unit may create the graph in time series including the plurality of plots indicating a correspondence relationship between the measurement time point and the data.

With this configuration, based on the area occupied by the plurality of plots in the graph in time series, the state of various types of cutting processes such as milling, drilling and turning can be detected.

(9) In any one of (1) to (7) above, the processing system may include a plurality of the sensors, and based on measurement results from each sensor at the plurality of measurement time points, the processing unit may create the graph including the plurality of plots each indicating a correspondence relationship of the data regarding the loading in two directions in a plane perpendicular to a rotation axis of the cutting tool at a corresponding one of the measurement time points.

With this configuration, as compared with a configuration in which the state of a cutting process is detected by using a graph in time series, change in the amplitude of abnormal vibration can be detected with higher sensitivity.

(10) In any one of (1) to (9) above, the sensor may be a strain sensor or an acceleration sensor.

With this configuration, when the sensor is a strain sensor, deformation of the cutting tool that affects machining accuracy can be more accurately detected. When the sensor is an acceleration sensor, smaller vibration of the cutting tool can be detected.

(11) A processing device according to the embodiment of the present disclosure includes: a measurement result acquisition unit configured to acquire a measurement result of a physical quantity indicating a state regarding loading on a cutting tool during a cutting process, the measurement result being from a sensor; a creation unit configured to create, based on the measurement result, from the sensor at each of a plurality of measurement time points, that has been acquired by the measurement result acquisition unit, a graph including a plurality of plots each indicating data regarding the loading at a corresponding one of the measurement time points; and a detection unit configured to detect a state of the cutting process using the cutting tool, based on an area occupied by the plurality of plots in the graph created by the creation unit.

(12) A processing method according to the embodiment of the present disclosure is a processing method performed in a processing device. The processing method includes: a step of acquiring a measurement result of a physical quantity indicating a state regarding loading on a cutting tool during a cutting process, the measurement result being from a sensor; a step of creating, based on the acquired measurement result from the sensor at each of a plurality of measurement time points, a graph including a plurality of plots each indicating data regarding the loading at a corresponding one of the measurement time points; and a step of detecting a state of the cutting process using the cutting tool, based on an area occupied by the plurality of plots in the created graph.

Thus, with the configuration in which the state of a cutting process is detected based on the area occupied by the plurality of plots in the graph created based on measurement results from the sensor, change in the positions of the plots due to occurrence of abnormal vibration can be detected as change in the area occupied by the plurality of plots in the graph, whereby abnormal vibration can be detected based on the change in the area. In the area occupied by the plurality of plots in the graph, change in the amplitude of abnormal vibration is easily reflected as compared with the standard deviation or the like of measurement results from the sensor, and thus, change in the amplitude of the abnormal vibration can be detected with higher sensitivity by using the area as an evaluation value. Therefore, the state of a cutting process using the cutting tool can be more accurately detected.

(13) A processing program according to the embodiment of the present disclosure is a processing program used in a processing device. The processing program causes a computer to function as: a measurement result acquisition unit configured to acquire a measurement result of a physical quantity indicating a state regarding loading on a cutting tool during a cutting process, the measurement result being from a sensor; a creation unit configured to create, based on the measurement result, from the sensor at each of a plurality of measurement time points, that has been acquired by the measurement result acquisition unit, a graph including a plurality of plots each indicating data regarding the loading at a corresponding one of the measurement time points; and a detection unit configured to detect a state of the cutting process using the cutting tool, based on an area occupied by the plurality of plots in the graph created by the creation unit.

Thus, with the method in which the state of a cutting process is detected based on the area occupied by the plurality of plots in the graph created based on measurement results from the sensor, change in the positions of the plots due to occurrence of abnormal vibration can be detected as change in the area occupied by the plurality of plots in the graph, whereby abnormal vibration can be detected based on the change in the area. In the area occupied by the plurality of plots in the graph, change in the amplitude of abnormal vibration is easily reflected as compared with the standard deviation or the like of measurement results from the sensor, and thus, change in the amplitude of the abnormal vibration can be detected with higher sensitivity by using the area as an evaluation value. Therefore, the state of a cutting process using the cutting tool can be more accurately detected.

Thus, with the configuration in which the state of a cutting process is detected based on the area occupied by the plurality of plots in the graph created based on measurement results from the sensor, change in the positions of the plots due to occurrence of abnormal vibration can be detected as change in the area occupied by the plurality of plots in the graph, whereby abnormal vibration can be detected based on the change in the area. In the area occupied by the plurality of plots in the graph, change in the amplitude of abnormal vibration is easily reflected as compared with the standard deviation or the like of measurement results from the sensor, and thus, change in the amplitude of the abnormal vibration can be detected with higher sensitivity by using the area as an evaluation value. Therefore, the state of a cutting process using the cutting tool can be more accurately detected.

Hereinafter, an embodiment of the present disclosure will be described with reference to the drawings. In the drawings, the same or corresponding parts are denoted by the same reference signs, and descriptions thereof are not repeated. At least some parts of the embodiment described below may be combined together as desired.

### [Configuration and basic operation]

### <Processing system>

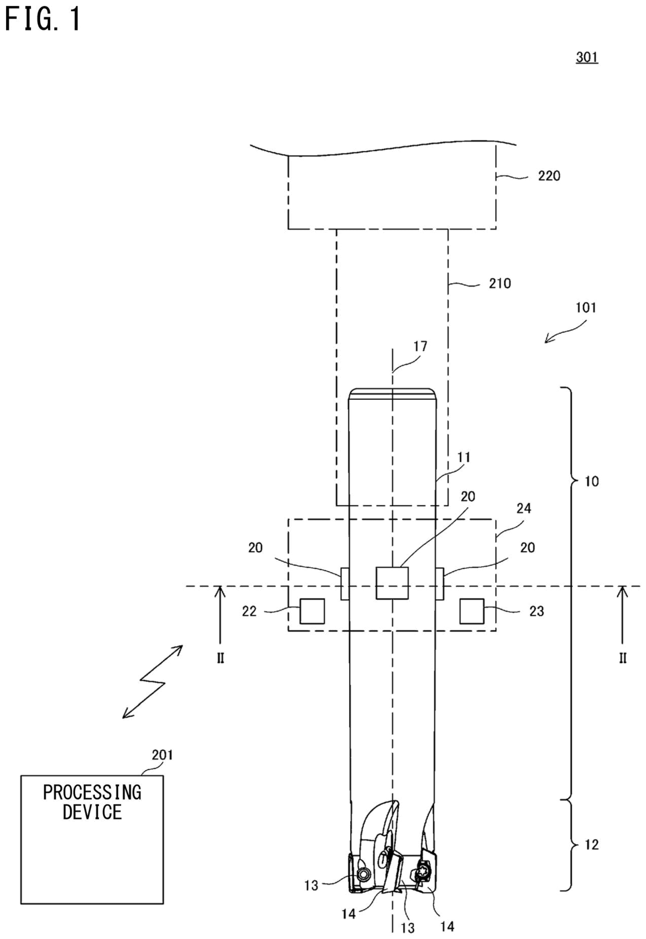

FIG. 1 shows a configuration of a processing system according to an embodiment of the present disclosure. With reference to FIG. 1, a processing system 301 includes a cutting tool 101, a plurality of strain sensors 20, and a processing device 201. The processing device 201 is an example of a processing unit in the processing system 301.

### <Cutting tool>

The cutting tool 101 is an end mill used in a machine tool such as a milling machine, and is used in milling of a workpiece formed of metal or the like, for example. The cutting tool 101 is a cutting-edge-replaceable end mill, for example. The cutting tool 101 is used in a state of being held by a tool holder 210 such as an arbor.

The cutting tool 101 includes a shaft part 10, a housing 24, a battery 22, a wireless communication device 23, and a insert mounting part 12. The shaft part 10 includes a shank part 11. In FIG. 1, the housing 24 is indicated by an alternate long and two short dashes line being an imaginary line.

The insert mounting part 12 is provided on the leading end side relative to the shaft part 10 in the cutting tool 101. The insert mounting part 12 includes four insert fixation parts 13, for example. An insert 14 is mounted to each insert fixation part 13. The insert mounting part 12 may be configured to include one, two, three, five, or more insert fixation parts 13.

Each insert 14 is an indexable insert, for example. The insert 14 is mounted to the insert fixation part 13 by screwing, for example. The insert 14 may be fixed to the insert fixation part 13 by means other than screwing. The cutting tool 101 may be a so-called solid end mill that includes a cutting edge integrated with the shaft part 10, instead of the insert mounting part 12.

The tool holder 210 is mounted to a main shaft 220 of the machine tool. The main shaft 220 has a columnar shape, and provides rotational force to the tool holder 210. The tool holder 210 is a columnar member disposed on an extended line of the main shaft 220. Specifically, an upper end portion of the tool holder 210 is held by the main shaft 220. A lower end portion of the tool holder 210 holds the shank part 11 of the cutting tool 101.

For example, each strain sensor 20 is mounted to the peripheral surface of the shaft part 10 via an adhesive or a tackiness agent. The strain sensor 20 may be mounted to the peripheral surface of the tool holder 210.

The housing 24 houses the strain sensors 20. Specifically, the housing 24 includes a bottom plate portion and a side wall portion (not shown). The housing 24 covers the strain sensors 20 from below and from the lateral side.

The battery 22 and the wireless communication device 23 are housed in the housing 24. For example, the battery 22 and the wireless communication device 23 are fixed to a bottom plate portion or a side wall portion of the housing 24. The wireless communication device 23 includes a communication circuit such as a communication IC (Integrated Circuit), for example. The battery 22 is connected to the strain sensors 20 and the wireless communication device 23 via a power line (not shown). The battery 22 supplies power to the strain sensors 20 and the wireless communication device 23 via the power line.

For example, the processing system 301 includes three strain sensors 20. The processing system 301 may be configured to include a smaller number of strain sensors 20 than the number of inserts 14 in the cutting tool 101, or may be configured to include a larger number of strain sensors 20 than the number of inserts 14 in the cutting tool 101. The processing system 301 may be configured to include a number of strain sensors 20 that is not correlated with the number of inserts 14 in the cutting tool 101.

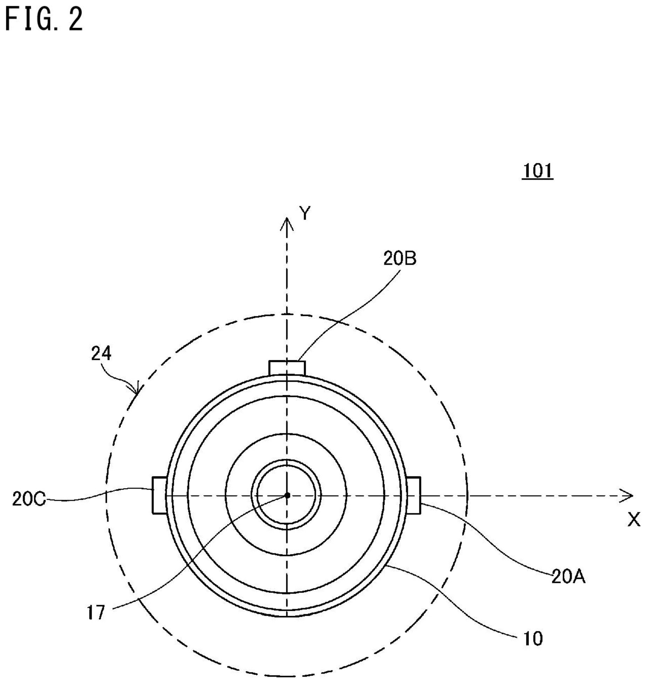

FIG. 2 is a cross-sectional view showing a configuration of the cutting tool according to the embodiment of the present disclosure. FIG. 2 is a cross-sectional view seen in the direction of arrows II-II in FIG. 1. With reference to FIG. 2, as the strain sensors 20, strain sensors 20A, 20B, 20C are provided to the shaft part 10. The strain sensor 20B is provided at a position shifted by 90° from the position where the strain sensor 20C is provided in the circumferential direction of the shaft part 10. The strain sensor 20A is provided at a position shifted by 90° from the position where the strain sensor 20B is provided in the circumferential direction of the shaft part 10. The strain sensors 20A, 20C are provided at positions in point symmetry with respect to a rotation axis 17 of the shaft part 10. For example, the strain sensors 20A, 20B, 20C may be provided at the same position or at positions different from each other, in the direction along the rotation axis 17 of the shaft part 10.

Irrespective of the position of the insert mounting part 12, the strain sensors 20A, 20B, 20C may each be provided at the peripheral surface of the shaft part 10 or the tool holder 210 as described above, for example. That is, the strain sensors 20A, 20B, 20C need not necessarily be provided at positions along the rotation axis 17 with respect to the insert fixation parts 13, at the peripheral surface of the shaft part 10 or the tool holder 210.

In the following, for description, on a plane orthogonal to the rotation axis 17, the direction from the rotation axis 17 to the position where the strain sensor 20A is provided will be referred to as X direction, and the direction from the rotation axis 17 to the position where the strain sensor 20B is provided will be referred to as Y direction.

Each strain sensor 20 measures a physical quantity indicating a state regarding loading on the cutting tool 101 during a cutting process. More specifically, the strain sensor 20 measures a strain ε of the shaft part 10 as a physical quantity indicating a state regarding loading on the cutting tool 101 during a cutting process. The strain sensor 20 may be configured to measure, as the strain ε, a shearing strain, a normal strain, or both of a shearing strain and a normal strain.

The strain sensor 20 measures the strain ε in a period from time ts being the start time of a cutting process, to time te being the end time of the cutting process, and transmits an analog signal at a level corresponding to the strain ε to the wireless communication device 23 via a signal line (not shown), for example.

The wireless communication device 23 performs, at a predetermined sampling cycle, AD (Analog Digital) conversion on an analog signal received from the strain sensor 20, and generates a sensor measurement value as a converted digital value. More specifically, the wireless communication device 23 performs AD conversion on an analog signal of the strain ε received from the strain sensor 20A, to generate a sensor measurement value sx, performs AD conversion on an analog signal of the strain ε received from the strain sensor 20B, to generate a sensor measurement value sy, and performs AD conversion on an analog signal of the strain ε received from the strain sensor 20C, to generate a sensor measurement value sr.

The wireless communication device 23 provides a time stamp indicating the sampling timing to the generated sensor measurement values sx, sy, sr, and saves the sensor measurement values sx, sy, sr provided with the time stamp into a storage unit (not shown). For example, at a predetermined cycle, the wireless communication device 23 acquires one or a plurality of sets of sensor measurement values sx, sy, sr, from the storage unit, generates a radio signal including the acquired sensor measurement values sx, sy, sr and identification information of their corresponding strain sensors 20, and transmits the generated radio signal to the processing device 201.

### [Processing device]

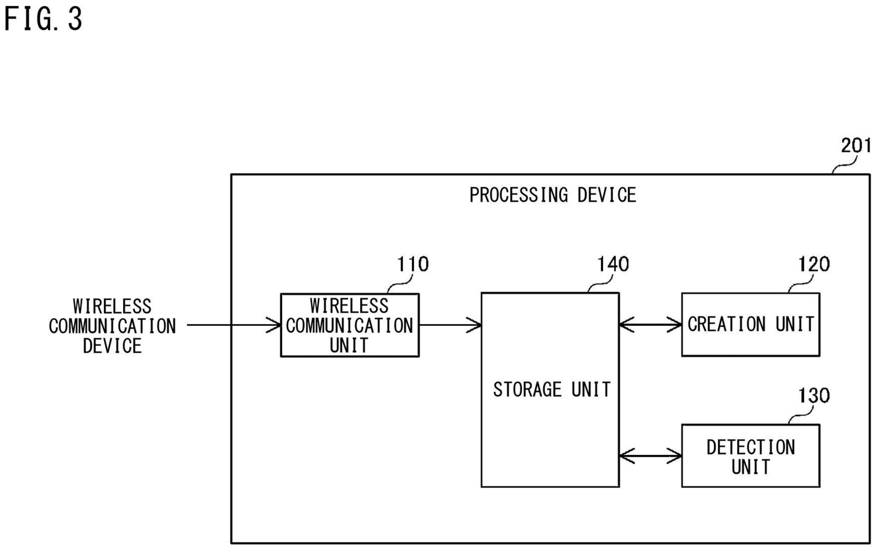

FIG. 3 shows a configuration of the processing device in a cutting system according to the embodiment of the present disclosure. With reference to FIG. 3, the processing device 201 includes a wireless communication unit 110, a creation unit 120, a detection unit 130, and a storage unit 140. The wireless communication unit 110 is an example of a measurement result acquisition unit. A part or the entirety of the wireless communication unit 110, the creation unit 120, and the detection unit 130 is realized by processing circuitry including one or a plurality of processors, for example. The storage unit 140 is a nonvolatile memory included in the above processing circuitry, for example. The processing device 201 performs a detection process of detecting the state of a cutting process using the cutting tool 101.

### <Wireless communication unit>

The wireless communication unit 110 acquires a measurement result of a physical quantity indicating a state regarding loading on the cutting tool 101 during a cutting process, the measurement result being from each strain sensor 20.

More specifically, the wireless communication unit 110 performs wireless communication with the wireless communication device 23 in the cutting tool 101. The wireless communication device 23 and the wireless communication unit 110 perform wireless communication with each other using a communication protocol such as ZigBee (registered trademark) according to IEEE 802.15.4, Bluetooth (registered trademark) according to IEEE 802.15.1, or UWB (Ultra Wide Band) according to IEEE 802.15.3a, for example. Between the wireless communication device 23 and the wireless communication unit 110, a communication protocol other than the above may be used.

The wireless communication unit 110 acquires the sensor measurement values sx, sy, sr and the identification information from the radio signal received from the wireless communication device 23 in the cutting tool 101. Then, the wireless communication unit 110 saves the sensor measurement values sx, sy, sr into the storage unit 140 in association with the identification information.

### <Creation unit>

Based on measurement results, from each strain sensor 20 at a plurality of measurement time points, acquired by the wireless communication unit 110, the creation unit 120 creates a graph G including a plurality of plots P each indicating data regarding loading on the cutting tool 101 at a corresponding measurement time point. More specifically, the creation unit 120 creates the graph G, based on the sensor measurement values sx, sy, sr saved in the storage unit 140 by the wireless communication unit 110. The graph G is used in the detection process performed in the detection unit 130 described later.

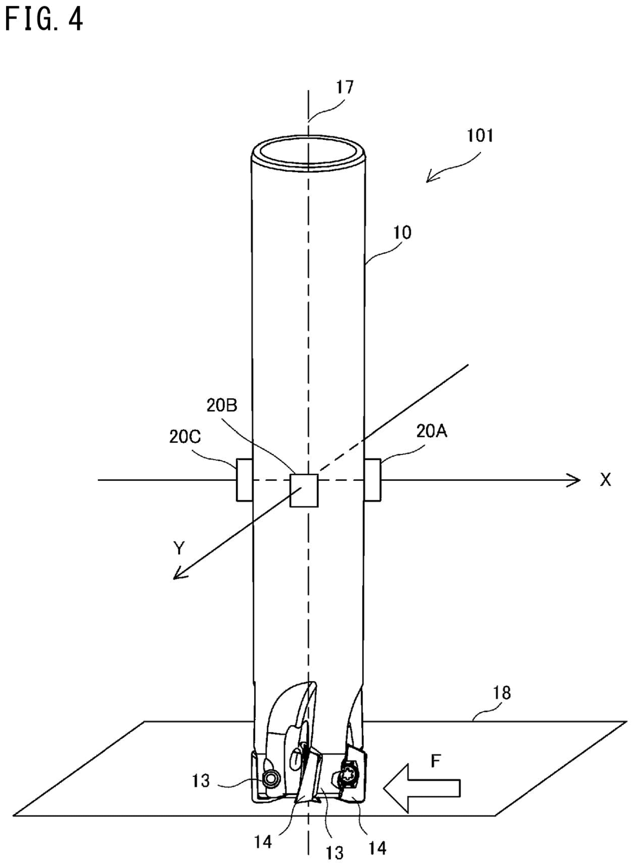

FIG. 4 is a perspective view schematically showing the cutting tool according to the embodiment of the present disclosure. With reference to FIG. 4, when a cutting process using the cutting tool 101 is performed, a load, i.e., a cutting force F [N], is applied from the workpiece to the cutting edge in a cutting-force-acting surface 18 which is a plane perpendicular to the rotation axis 17 and which is a plane that passes the cutting edge of the insert 14.

For example, based on the sensor measurement values sx, sy, sr, the creation unit 120 calculates a cutting force Fx being a cutting force F in the X direction received by the cutting tool 101 in the cutting-force-acting surface 18, and a cutting force Fy being a cutting force F in the Y direction received by the cutting tool 101 in the cutting-force-acting surface 18.

More specifically, the storage unit 140 stores therein a transformation formula Fm1 for transforming the sensor measurement values sx, sy, sr into the cutting forces Fx, Fy. For example, the transformation formula Fm1 is created in advance by using a technology described in PATENT LITERATURE 2, 3, or the like. More specifically, the transformation formula Fm1 is a transformation matrix created in advance based on the sensor measurement values sx, sy, sr obtained when a known load is applied to the cutting tool 101.

The creation unit 120 calculates the cutting forces Fx, Fy, based on the sensor measurement value sx, sy, sr and the transformation formula Fm1 in the storage unit 140. The sensor measurement values sx, sy, sr and the cutting forces Fx, Fy are examples of data regarding loading.

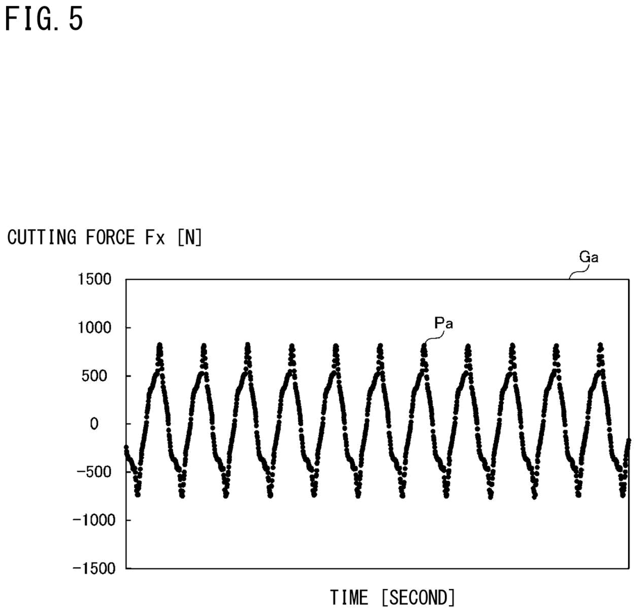

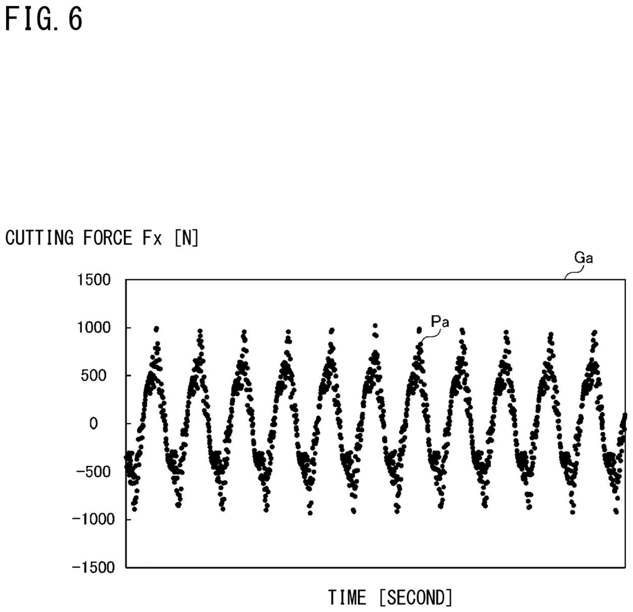

FIG. 5 and FIG. 6 each show an example of a graph created by the creation unit in the processing device according to the embodiment of the present disclosure. FIG. 5 and FIG. 6 each show a graph Ga created by the creation unit 120 when a cutting process has been performed under a predetermined machining condition Wc1 by using the cutting tool 101. In the graph Ga, the horizontal axis represents time [second], and the vertical axis represents the cutting force Fx [N]. FIG. 5 shows the graph Ga in a state where no chatter vibration of the cutting tool 101 has occurred, and FIG. 6 shows the graph Ga in a state where chatter vibration of the cutting tool 101 has occurred.

With reference to FIG. 5 and FIG. 6, the creation unit 120 creates the graph Ga being the graph G in time series including a plurality of plots Pa indicating a correspondence relationship between the measurement time point and the cutting force Fx. The plot Pa is an example of the plot P. For example, the shape of the plot Pa is circular. The shape of the plot Pa may be a shape other than a circular shape such as a quadrangle or a triangle. The creation unit 120 may be configured to create the graph Ga including the plots Pa indicating a correspondence relationship between the measurement time point and the cutting force Fy, or may be configured to create the graph Ga including the plots Pa indicating a correspondence relationship between the measurement time point and the sensor measurement value sx or the sensor measurement value sy.

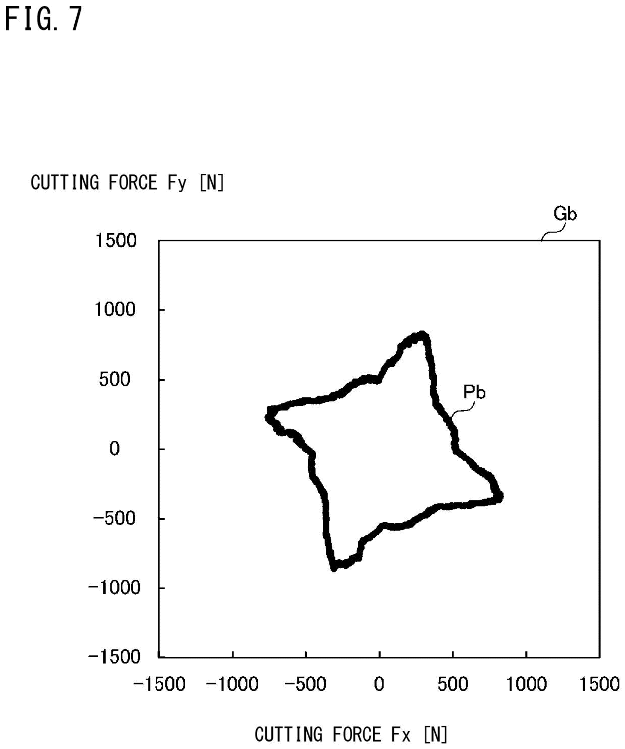

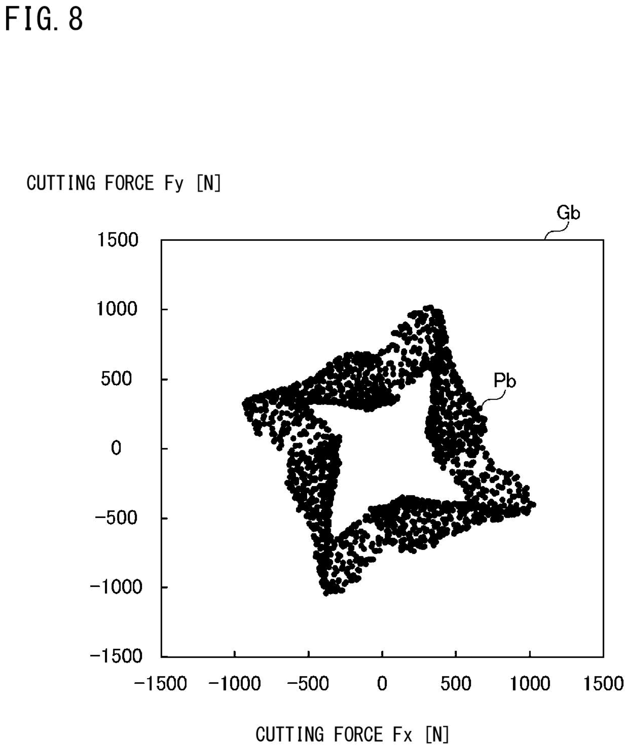

FIG. 7 and FIG. 8 each show an example of a graph created by the creation unit in the processing device according to the embodiment of the present disclosure. FIG. 7 and FIG. 8 each show a graph Gb of the cutting forces Fx, Fy created by the creation unit 120 when a cutting process has been performed under the machining condition Wc1 by using the cutting tool 101. In the graph Gb, the horizontal axis represents the cutting force Fx [N], and the vertical axis represents the cutting force Fy [N]. FIG. 7 shows the graph Gb in a state where no chatter vibration has occurred, and FIG. 8 shows the graph Gb in a state where chatter vibration has occurred.

With reference to FIG. 7 and FIG. 8, based on the measurement results from each strain sensor 20 at a plurality of measurement time points, the creation unit 120 creates the graph Gb being the graph G including a plurality of plots Pb each indicating a correspondence relationship between the cutting forces Fx, Fy at the cutting-force-acting surface 18 at a corresponding measurement time point. The plot Pb is an example of the plot P. For example, the shape of the plot Pb is circular. The shape of the plot Pb may be a shape other than a circular shape such as a quadrangle or a triangle.

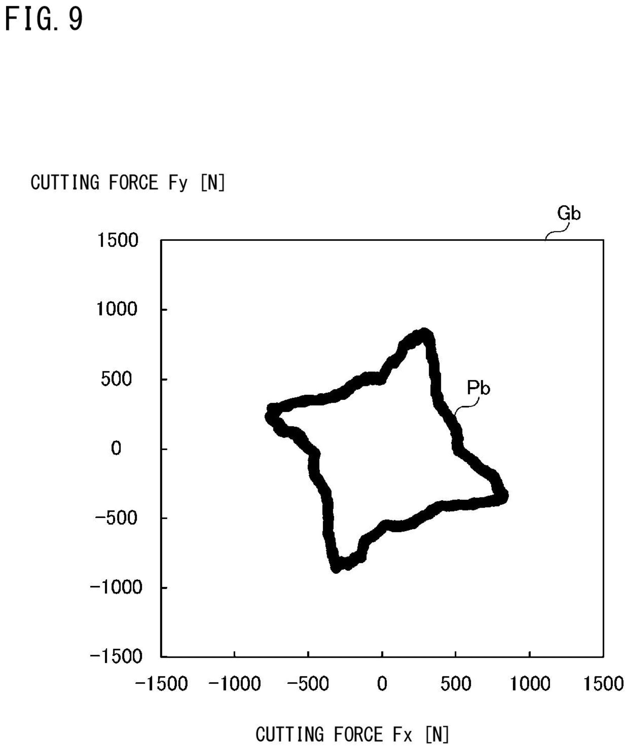

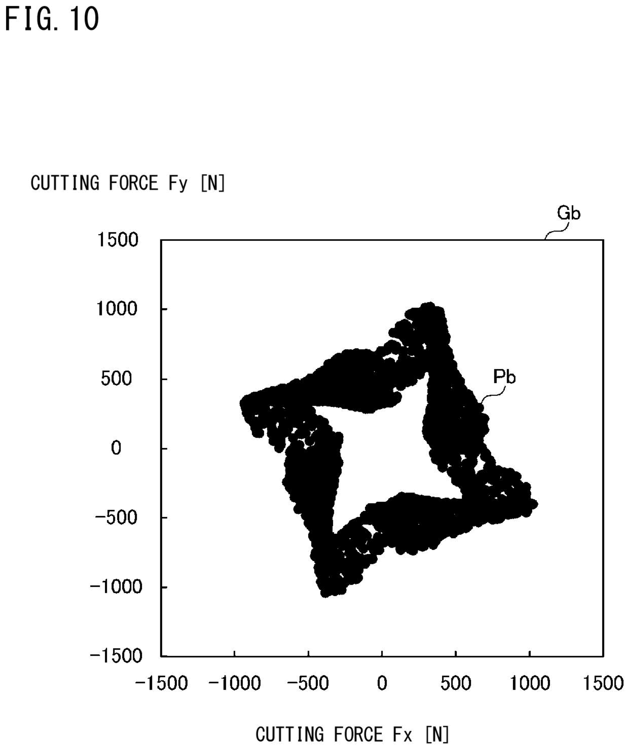

FIG. 9 and FIG. 10 each show an example of a graph created by the creation unit in the processing device according to the embodiment of the present disclosure. FIG. 9 and FIG. 10 each show the graph Gb having a larger diameter of the plot Pb than that of the graph Gb shown in FIG. 7 and FIG. 8.

With reference to FIG. 9 and FIG. 10, for example, the creation unit 120 creates a plurality of the graphs G respectively having different sizes of the plot P. More specifically, using the same cutting forces Fx, Fy calculated based on the same sensor measurement values sx, sy, sr, the creation unit 120 creates a plurality of the graphs Gb respectively having different diameters of the plot Pb. As an example, using the same cutting forces Fx, Fy calculated based on the same sensor measurement values sx, sy, sr, the creation unit 120 creates two graphs Gb respectively having different diameters of the plot Pb, and a display graph Gdis being the graph Gb having a smaller diameter of the plot Pb than those of the two graphs Gb.

For example, at a creation timing according to a creation cycle Pg and based on a plurality of sensor measurement values sx, sy, sr in a predetermined target period T starting from a time (Pg×m), the creation unit 120 calculates the cutting forces Fx, Fy at each measurement time point in the target period T. Then, the creation unit 120 creates the graphs Ga, Gb and the display graph Gdis by using the calculated cutting forces Fx, Fy. In a case where the creation cycle Pg is the same as the target period T, the target periods T may be continuous. In a case where the creation cycle Pg is shorter than the target period T, the target periods T may partially overlap. In a case where the creation cycle gP is longer than the target period T, the target periods T may be intermittently provided.

For example, the creation unit 120 creates the graph G, based on measurement results from each strain sensor 20 at a plurality of measurement time points in a period necessary for the cutting tool 101 to rotate a plurality of times. Here, the target period T is a period necessary for the cutting tool 101 to rotate a plurality of times.

The creation unit 120 creates the graphs Ga, Gb and the display graph Gdis for each target period T at the creation timing according to the creation cycle Pg, and saves graph information including the created graphs Ga, Gb and display graph Gdis into the storage unit 140 in association with the target period T.

The creation unit 120 may be configured to calculate, instead of the cutting forces Fx, Fy or in addition to the cutting forces Fx, Fy, a moment Mx being a moment M caused by loading in the X direction in the cutting-force-acting surface 18, and a moment My being the moment M caused by loading in the Y direction in the cutting-force-acting surface 18.

More specifically, the storage unit 140 stores therein a transformation formula Fm2 for transforming the sensor measurement values sx, sy, sr into the moments Mx, My. For example, the transformation formula Fm2 is created in advance by using a technology described in PATENT LITERATURE 2, 3, or the like. More specifically, the transformation formula Fm2 is a transformation matrix created in advance based on the sensor measurement values sx, sy, sr obtained when a known load is applied to the cutting tool 101.

The creation unit 120 calculates the moments Mx, My, based on the sensor measurement value sx, sy, sr and the transformation formula Fm2 in the storage unit 140. The moments Mx, My are examples of data regarding loading.

The creation unit 120 creates a graph Gc being the graph G in time series including a plurality of plots Pc indicating a correspondence relationship between the measurement time point and the calculated moment Mx. The plot Pc is an example of the plot P. For example, the shape of the plot Pc is circular. The shape of the plot Pc may be a shape other than a circular shape such as a quadrangle, a triangle, or the like.

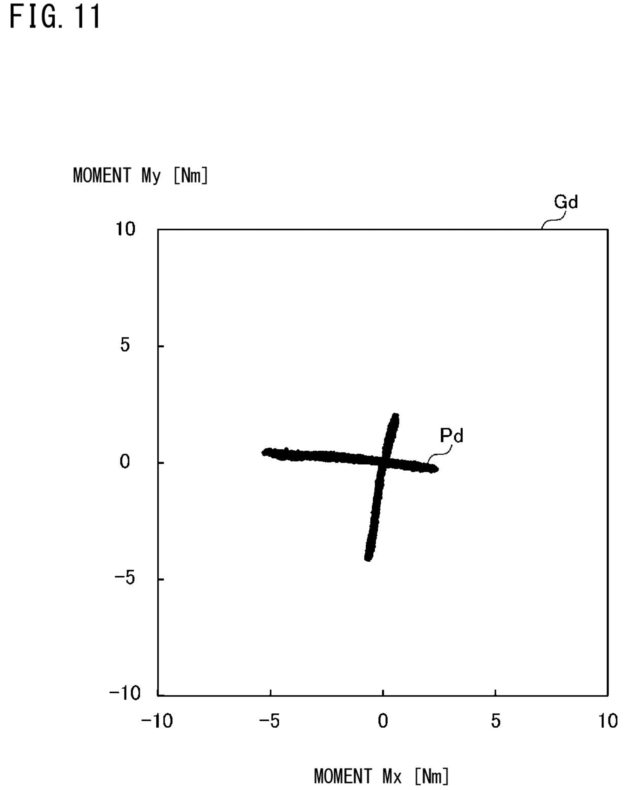

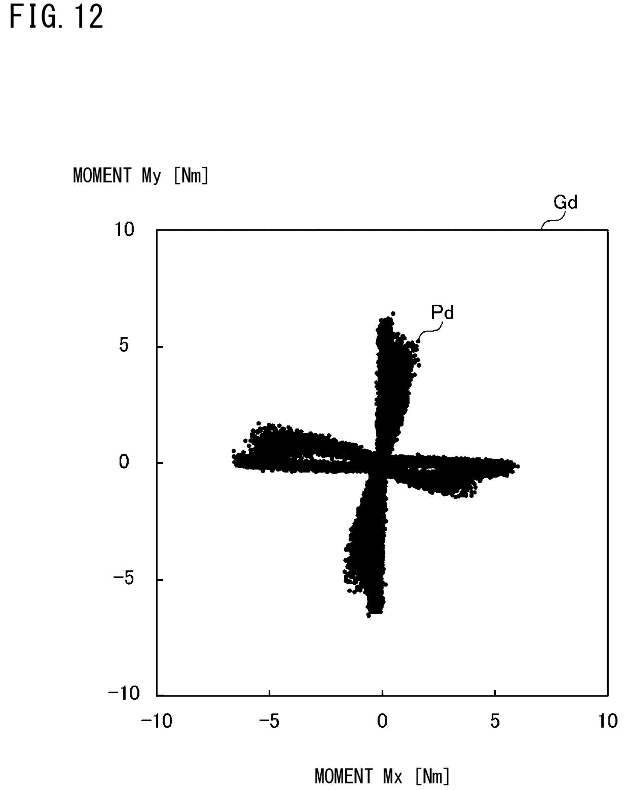

FIG. 11 and FIG. 12 each show another example of the graph created by the creation unit in the processing device according to the embodiment of the present disclosure. FIG. 11 and FIG. 12 each show a graph Gd of the moments Mx, My created by the creation unit 120 when a cutting process has been performed under a predetermined machining condition Wc2 by using the cutting tool 101. In the graph Gd, the horizontal axis represents the moment Mx [Nm], and the vertical axis represents the moment My [Nm]. FIG. 11 shows the graph Gd during the first cutting process, and FIG. 12 shows the graph Gd during the 150th cutting process.

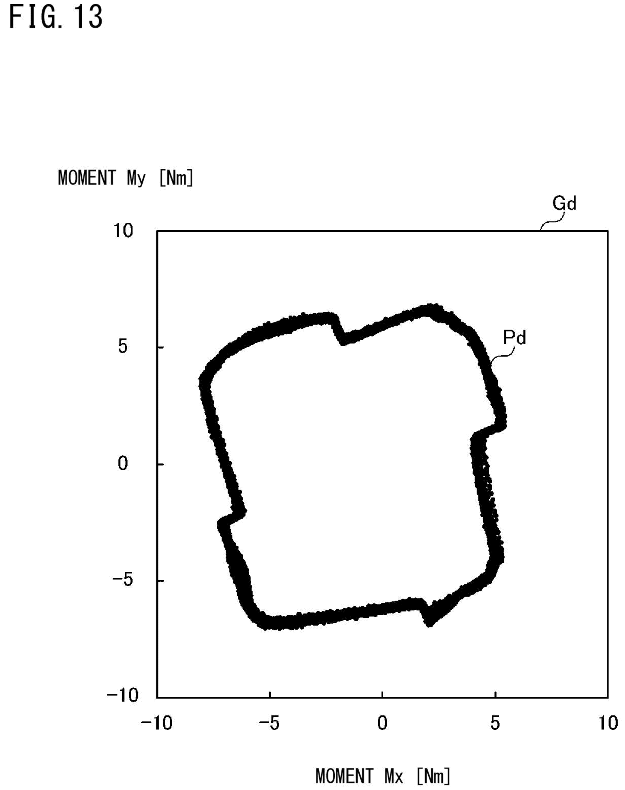

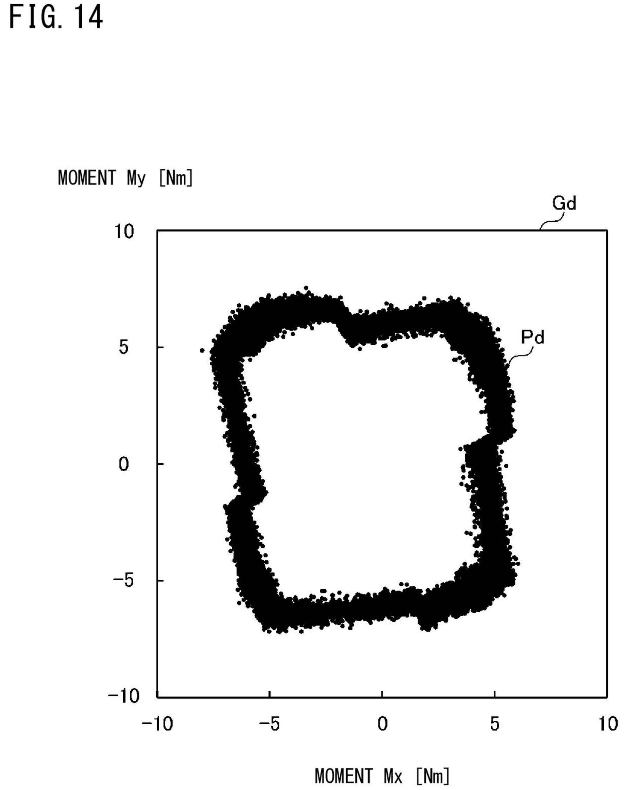

FIG. 13 and FIG. 14 each show another example of the graph created by the creation unit in the processing device according to the embodiment of the present disclosure. FIG. 13 and FIG. 14 each show the graph Gd of the moments Mx, My created by the creation unit 120 when a cutting process has been performed under a predetermined machining condition Wc3 by using the cutting tool 101. FIG. 13 shows the graph Gd during the first cutting process, and FIG. 14 shows the graph Gd during the 50th cutting process.

With reference to FIG. 11 to FIG. 14, based on measurement results from each strain sensor 20 at a plurality of measurement time points, the creation unit 120 creates the graph Gd being the graph G including a plurality of plots Pd each indicating a correspondence relationship between the moments Mx, My at the cutting-force-acting surface 18 at a corresponding measurement time point. The plot Pd is an example of the plot P. For example, the shape of the plot Pd is circular. The shape of the plot Pd may be a shape other than a circular shape such as a quadrangle or a triangle.

Here, with reference to FIG. 5 and FIG. 6 again, in the graph Ga in a state where chatter vibration has occurred, the absolute value of the cutting force Fx is larger than that in the graph Ga in a state where no chatter vibration has occurred. This is because, in a state where chatter vibration has occurred, the chatter vibration being abnormal vibration is added to basic vibration being normal vibration caused by engagement and disengagement of the cutting edge with respect to the workpiece. In the chatter vibration, as compared with the basic vibration, the frequency is high, and the amplitude is small at the initial stage of occurrence of chatter vibration. In the graph Ga in a state where chatter vibration has occurred, an area Ag occupied by the plots Pa is larger than that in the graph Ga in a state where no chatter vibration has occurred. This is because, in the graph Ga in a state where chatter vibration has occurred, the range of the value that the cutting force Fx can take is larger than that in the graph Ga in a state where no chatter vibration has occurred, and thus, overlapping of a plurality of plots Pa is reduced.

With reference to FIG. 7 to FIG. 10 again, in the graph Gb in a state where chatter vibration has occurred, the absolute values of the cutting forces Fx, Fy are larger than those in the graph Gb in a state where no chatter vibration has occurred. This is because, in a state where chatter vibration has occurred, the chatter vibration being abnormal vibration is added to basic vibration. In the graph Gb in a state where chatter vibration has occurred, the area Ag occupied by the plots Pb in the graph Gb is larger than that in the graph Gb in a state where no chatter vibration has occurred. This is because, in the graph Gb in a state where chatter vibration has occurred, the absolute values of the cutting forces Fx, Fy are larger than those in the graph Gb in a state where no chatter vibration has occurred, and thus, the region where a plurality of plots Pb overlap is reduced.

With reference to FIG. 11 and FIG. 12 again, in the graph Gd during the 150th cutting process, the absolute values of the moments Mx, My are larger than those in the graph Gd during the first cutting process. This is because, when the insert 14 having been used 150 times of cutting processes is used, basic vibration becomes large due to wear of the cutting edge, and in addition, abnormal vibration due to wear of the cutting edge is added to the basic vibration. The abnormal vibration due to wear of the cutting edge has a higher frequency and smaller amplitude than those of the basic vibration. In the graph Gd during the 150th cutting process, the area Ag occupied by the plots Pd in the graph Gd is larger than that in the graph Gd during the first cutting process. This is because, in the graph Gd during the 150th cutting process, the absolute values of the moments Mx, My are larger than those in the graph Gd during the first cutting process, and thus, the region where a plurality of plots Pd overlap is reduced.

### <Detection unit>

The detection unit 130 performs a detection process of detecting the state of a cutting process using the cutting tool 101, based on the area Ag occupied by a plurality of plots P in the graph G created by the creation unit 120.

More specifically, when a graph G in the target period T has been saved in the storage unit 140 by the creation unit 120, the detection unit 130 acquires the graph G from the storage unit 140. The detection unit 130 generates a binary image in which the region occupied by the plots P in the acquired graph G is black and the region where no plots P are present in the graph G is white. The detection unit 130 calculates, as the area Ag, the number of pixels of the black region in the generated binary image.

When having calculated the area Ag, the detection unit 130 performs the detection process by using the calculated area Ag as an evaluation value. More specifically, the detection unit 130 compares the calculated area Ag with a predetermined threshold ThA, and detects abnormal vibration based on the comparison result. The threshold ThA is set in advance based on the area Ag occupied by the plots P in a graph G created by the creation unit 120 in a state where a normal cutting process is being performed.

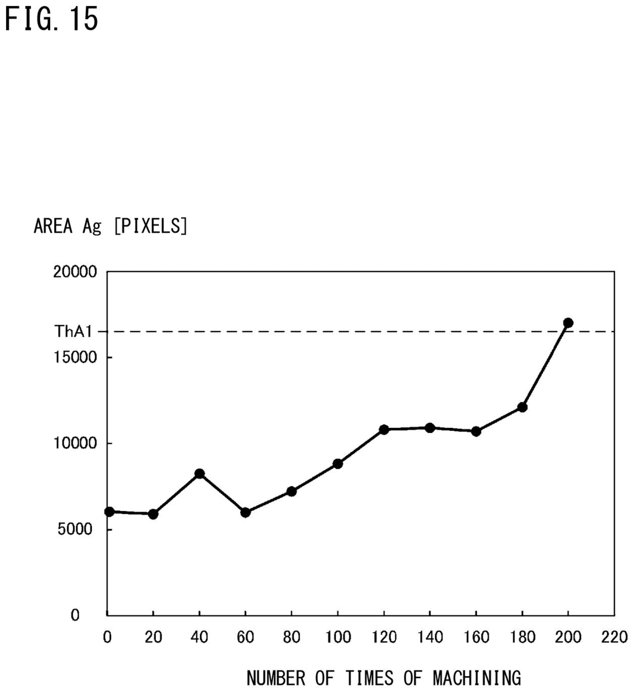

FIG. 15 shows an example of the detection process performed by the detection unit in the processing device according to the embodiment of the present disclosure. In FIG. 15, the horizontal axis represents the number of times of machining, and the vertical axis represents the area Ag [pixels].

With reference to FIG. 15, every time the detection unit 130 has calculated the area Ag, the detection unit 130 compares the calculated area Ag with a threshold ThA1 being an example of the threshold ThA. When the area Ag is less than or equal to the threshold ThA1, the detection unit 130 determines that the state of the cutting process using the cutting tool 101 is normal. On the other hand, when the area Ag is larger than the threshold ThA1, the detection unit 130 determines that abnormal vibration due to wear of the cutting edge has occurred.

The detection unit 130 may perform the detection process by using a threshold ThA2 being an example of the threshold ThA, instead of the threshold ThA1 or in addition to the threshold ThA1. More specifically, every time the detection unit 130 has calculated the area Ag, the detection unit 130 compares the calculated area Ag with the threshold ThA2. When the area Ag is less than or equal to the threshold ThA2, the detection unit 130 determines that the state of the cutting process using the cutting tool 101 is normal. On the other hand, when the area Ag is larger than the threshold ThA2, the detection unit 130 determines that chatter vibration being abnormal vibration has occurred. The threshold ThA2 may be a value different from the threshold ThA1, or may be the same value.

The detection unit 130 may detect another abnormal vibration that can cause change in the plots P in the graph G, such as abnormal vibration due to chipping of the cutting edge, in addition to chatter vibration and abnormal vibration due to wear of the cutting edge, or instead of these. The detection unit 130 may determine the life of the cutting tool 101, based on the area Ag, instead of detecting abnormal vibration or in addition to detecting abnormal vibration. As described above, due to wear of the cutting edge, basic vibration may become large in some cases. Therefore, the life of the cutting tool 101 can be determined based on change in the area Ag resulting from the basic vibration becoming large.

For example, the detection unit 130 detects the state of a cutting process using the cutting tool 101, based on the area Ag occupied by a plurality of plots P in each of a plurality of graphs G respectively having different sizes of the plot P. More specifically, the detection unit 130 calculates the area Ag occupied by the plots P in each of a plurality of graphs G that respectively have different sizes of the plot P and that have been created by using the same cutting forces Fx, Fy by the creation unit 120. When having calculated the area Ag for each graph G, the detection unit 130 compares the calculated area Ag for each graph G with a plurality of thresholds ThA which are different in accordance with the size of the plot P. For example, when at least one of the plurality of areas Ag calculated for the respective graphs G is larger than a corresponding threshold ThA1, the detection unit 130 determines that abnormal vibration due to wear of the cutting edge has occurred. For example, when at least one of the plurality of areas Ag calculated for the respective graphs G is larger than a corresponding threshold ThA2, the detection unit 130 determines that chatter vibration has occurred.

When having determined that abnormal vibration has occurred, the detection unit 130 performs a notification process of notifying a user of the processing system 301 of the determination result. For example, upon reception of the notification of the determination result, the user stops the cutting process using the cutting tool 101. Here, in chatter vibration, while the amplitude is small at the initial stage of occurrence, the amplitude becomes large due to increase in chatter vibration, which may affect the machining accuracy and the tool life in some cases. In the processing device 201 according to the embodiment of the present disclosure, since chatter vibration in which the amplitude is small in the initial stage of occurrence can be detected, it is possible to urge the user to stop the cutting process before the machining accuracy and the tool life are affected.

For example, the detection unit 130 performs a process of selectively displaying at least one of a plurality of graphs G respectively having different sizes of the plot P. More specifically, when graph information has been saved in the storage unit 140 by the creation unit 120, the detection unit 130 performs a process of displaying, on a display (not shown), the display graph Gdis included in the graph information. In addition, in accordance with an operation by the user, the detection unit 130 performs a process of displaying, on a display (not shown), a graph G other than the display graph Gdis among a plurality of graphs G respectively having different sizes of the plot P.

The detection unit 130 may be configured to perform the detection process by using, as the evaluation value, an area ratio Rg being the ratio of the area Ag to the area of the entire region of the graph G, instead of the area Ag or in addition to the area Ag. More specifically, the detection unit 130 calculates, as the area ratio Rg, the ratio of the number of pixels of the black region in the binary image relative to the number of pixels of the entire region of the graph G. When having calculated the area ratio Rg, the detection unit 130 compares the calculated area ratio Rg with a predetermined threshold ThB, and detects abnormal vibration based on the comparison result. The threshold ThB is set in advance based on the area ratio Rg of the area Ag to the area of the entire region of the graph G created by the creation unit 120 in a state where a normal cutting process is being performed.

### (Simulation result)

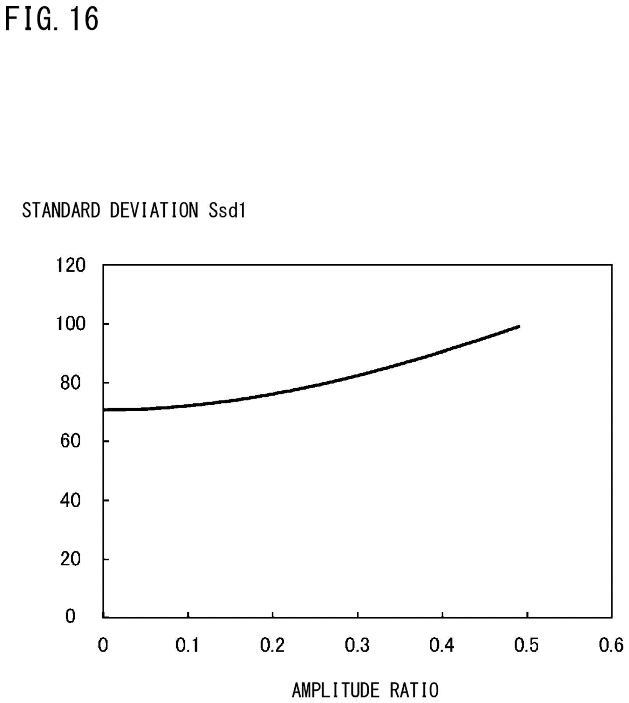

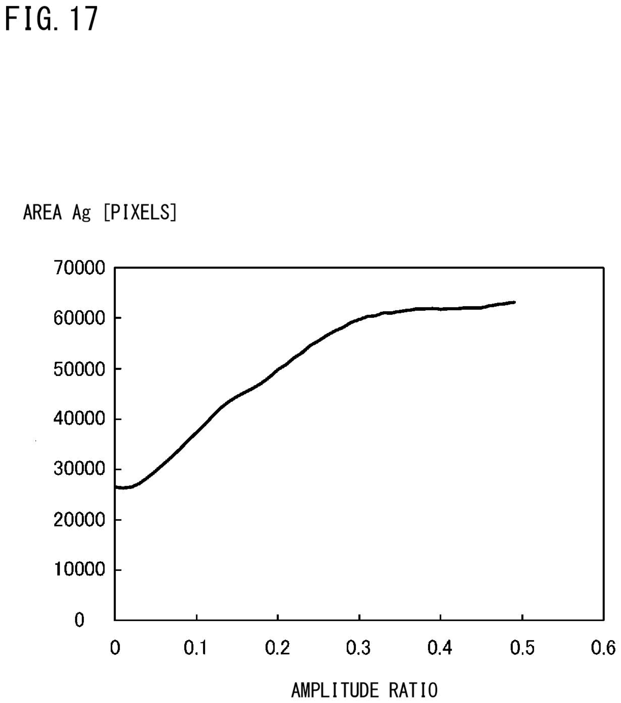

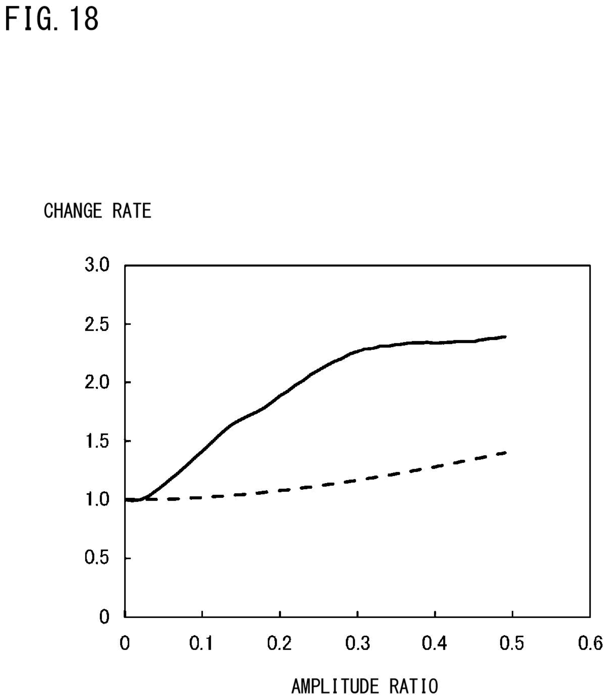

FIG. 16 to FIG. 18 each show a simulation result for describing accuracy of detection of abnormal vibration performed in the processing device according to the embodiment of the present disclosure. FIG. 16 to FIG. 18 each show a simulation result of the detection accuracy of abnormal vibration when the frequency of abnormal vibration is 20 times the frequency of basic vibration and the amplitude of abnormal vibration is changed from 0 times to 0.5 times the amplitude of basic vibration. In FIG. 16 to FIG. 18, the horizontal axis represents the amplitude ratio of the amplitude of abnormal vibration to the amplitude of basic vibration. In FIG. 16, the vertical axis represents standard deviation Ssd1 of the amplitude of vibration. In FIG. 17, the vertical axis represents the area Ag. FIG. 17 shows a simulation result of the area Ag in the graph G in which the maximum value of data regarding loading on the cutting tool 101 is a value corresponding to 169 pixels and the diameter of the plot P is 11 pixels. In FIG. 18, the vertical axis represents the change rate of the evaluation value relative to the case where the amplitude of abnormal vibration is zero. The broken line in FIG. 18 indicates the change rate of the standard deviation Ssd1 relative to the case where the amplitude of abnormal vibration is zero. The solid line in FIG. 18 indicates the change rate of the area Ag relative to the case where the amplitude of abnormal vibration is zero.

With reference to FIG. 16 to FIG. 18, the change rate of the area Ag relative to the case where the amplitude of abnormal vibration is zero is larger than the change rate of the standard deviation Ssd1 relative to the case where the amplitude of abnormal vibration is zero. Therefore, when the area Ag is used as the evaluation value, change in the amplitude of abnormal vibration can be detected with higher sensitivity than in the case where the standard deviation Ssd1 is used as the evaluation value. Also when the area ratio Rg is used as the evaluation value, change in the amplitude of abnormal vibration can be detected with higher sensitivity than in the case where the standard deviation Ssd1 is used as the evaluation value.

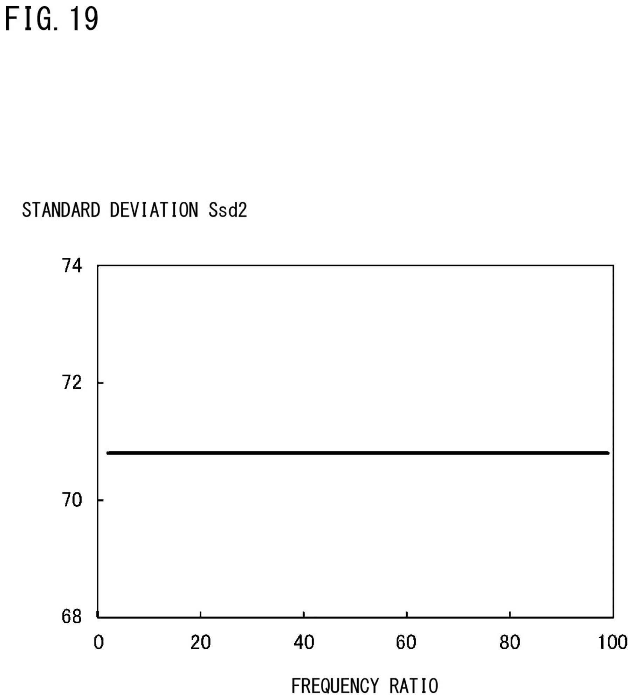

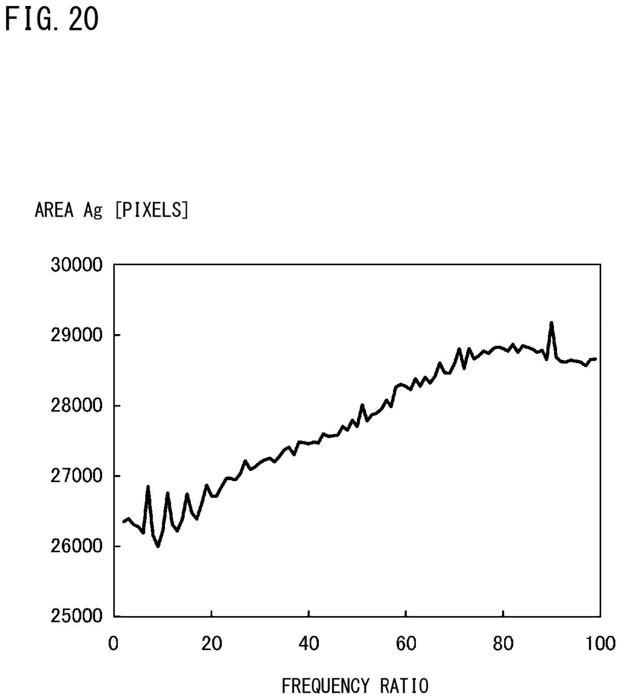

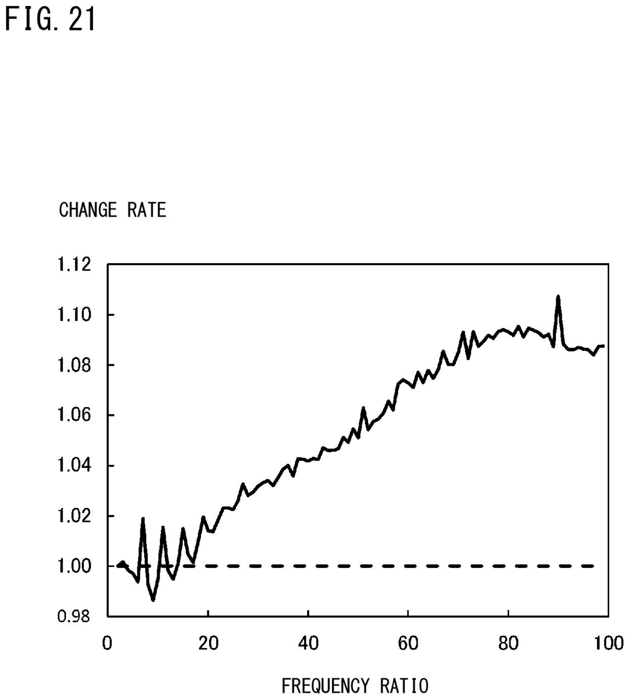

FIG. 19 to FIG. 21 each show a simulation result for describing accuracy of detection of abnormal vibration performed in the processing device according to the embodiment of the present disclosure. FIG. 19 to FIG. 21 each show a simulation result of the detection accuracy of abnormal vibration when the amplitude of abnormal vibration is 0.05 times the amplitude of basic vibration and the frequency of abnormal vibration is changed from 2 times to 100 times the frequency of basic vibration. In FIG. 19 to FIG. 21, the horizontal axis represents the frequency ratio of the frequency of abnormal vibration to the frequency of basic vibration. In FIG. 19, the vertical axis represents standard deviation Ssd2 of the amplitude of vibration. In FIG. 20, the vertical axis represents the area Ag. FIG. 20 shows a simulation result of the area Ag in the graph G in which the maximum value of data regarding loading on the cutting tool 101 is a value corresponding to 169 pixels and the diameter of the plot P is 11 pixels. In FIG. 21, the vertical axis represents the change rate of the evaluation value relative to the case where the frequency of abnormal vibration is 2 times that of basic vibration. The broken line in FIG. 21 indicates the change rate of the standard deviation Ssd2 relative to the case where the frequency of abnormal vibration is 2 times that of basic vibration. The solid line in FIG. 21 indicates the change rate of the area Ag relative to the case where the frequency of abnormal vibration is 2 times that of basic vibration.

With reference to FIG. 19 to FIG. 21, the change rate of the area Ag relative to the case where the frequency of abnormal vibration is 2 times that of basic vibration is larger than the change rate of the standard deviation Ssd2 relative to the case where the frequency of abnormal vibration is 2 times that of basic vibration. Therefore, when the area Ag is used as the evaluation value, change in the frequency of abnormal vibration can be detected with higher sensitivity than in the case where the standard deviation Ssd2 is used as the evaluation value. Also when the area ratio Rg is used as the evaluation value, change in the frequency of abnormal vibration can be detected with higher sensitivity than in the case where the standard deviation Ssd2 is used as the evaluation value.

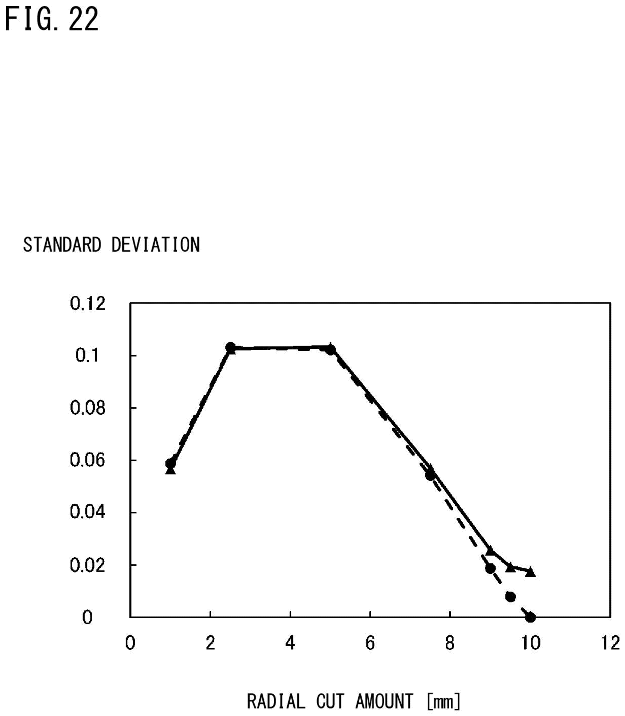

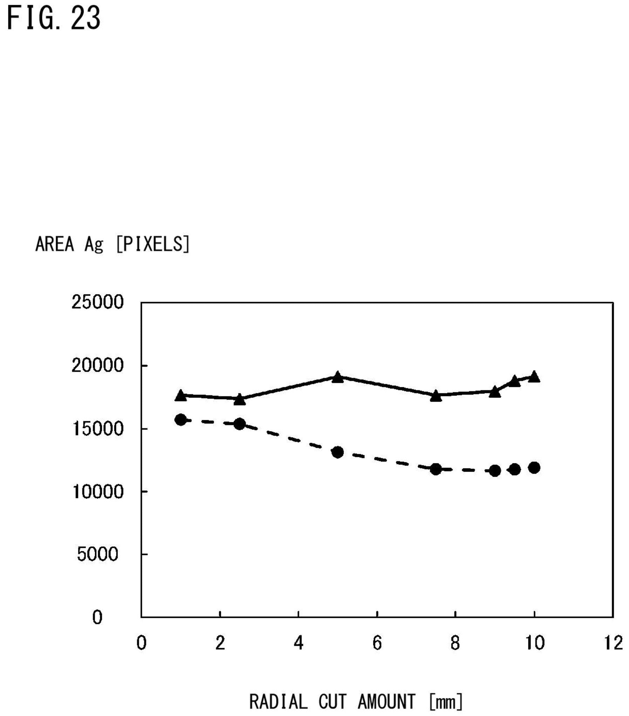

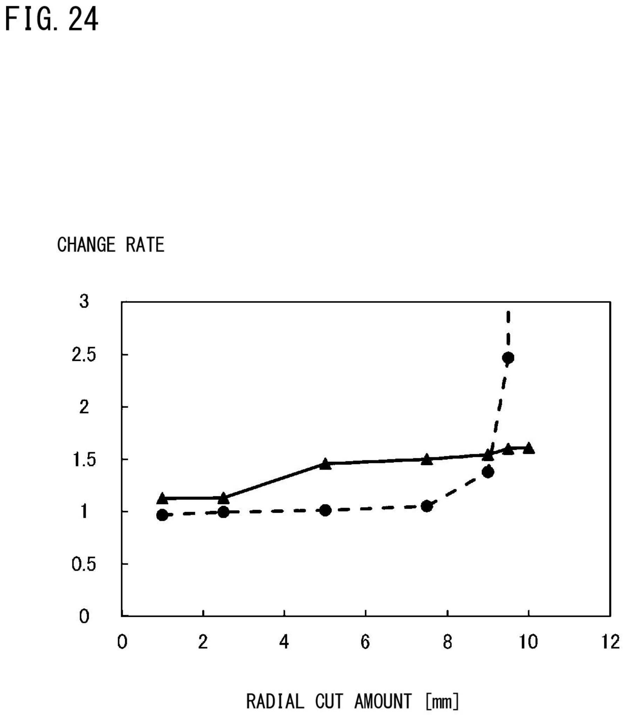

FIG. 22 to FIG. 24 each show a simulation result for describing accuracy of detection of abnormal vibration performed in the processing device according to the embodiment of the present disclosure. In FIG. 22 to FIG. 24, the horizontal axis represents the radial cut amount [mm]. In FIG. 22, the vertical axis represents the standard deviation of the cutting forces Fx, Fy. In FIG. 23, the vertical axis represents the area Ag. FIG. 23 shows a simulation result of the area Ag in the graph G in which the maximum value of data regarding loading on the cutting tool 101 is a value corresponding to 175 pixels and the diameter of the plot P is 11 pixels. In FIG. 24, the vertical axis represents the change rate of the evaluation value. The broken line in FIG. 22 and FIG. 23 shows a simulation result of the evaluation value when only basic vibration due to the cutting forces Fx, Fy has occurred. The solid line in FIG. 22 and FIG. 23 shows a simulation result of the evaluation value when abnormal vibration in which the amplitude is 5% of the maximum value of that of basic vibration and the frequency is 40 times that of basic vibration is added to the basic vibration. The broken line in FIG. 24 indicates the change rate of the standard deviation of the cutting forces Fx, Fy resulting from the addition of the abnormal vibration. The solid line in FIG. 24 indicates the change rate of the area Ag resulting from the addition of the abnormal vibration.

With reference to FIG. 22 and FIG. 24, with respect to the standard deviation of the cutting forces Fx, Fy, when the radial cut amount is 9 mm or more, the change rate of the standard deviation resulting from the addition of the abnormal vibration is large, and thus, the abnormal vibration can be detected by using the standard deviation of the cutting forces Fx, Fy as the evaluation value. On the other hand, with respect to the standard deviation of the cutting forces Fx, Fy, when the radial cut amount is less than 9 mm, the change rate of the standard deviation resulting from the addition of the abnormal vibration is small and has a value close to 1, and thus, it is difficult to detect the abnormal vibration when the standard deviation of the cutting forces Fx, Fy is used as the evaluation value.

With reference to FIG. 23 and FIG. 24, in contrast, with respect to the area Ag, the change rate of the standard deviation resulting from the addition of the abnormal vibration is large, irrespective of the radial cut amount. Specifically, when abnormal vibration in which the amplitude is 5% of the maximum value of that of basic vibration has occurred, the area Ag increases by 12% or more. Therefore, irrespective of the radial cut amount, abnormal vibration can be detected by using the area Ag as the evaluation value. With respect to the area ratio Rg, similar to the area Ag, the change rate of the standard deviation resulting from the addition of the abnormal vibration is large, and thus, the abnormal vibration can be detected by using the area ratio Rg as the evaluation value.

### (Size of plot P and pitch PT)

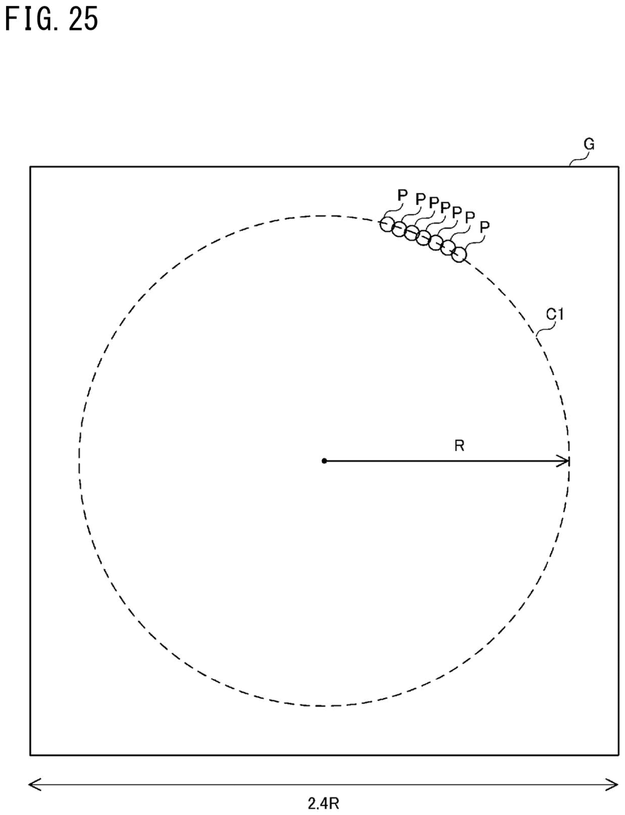

FIG. 25 is a schematic diagram of a graph created by the creation unit in the processing device according to the embodiment of the present disclosure. Fig. 25 shows a graph G in a state where no abnormal vibration has occurred. With reference to FIG. 25, for example, based on the sensor measurement values sx, sy, sr, the creation unit 120 creates the graph G including a plurality of plots P disposed on the circumference of a circle C1 having a radius R.

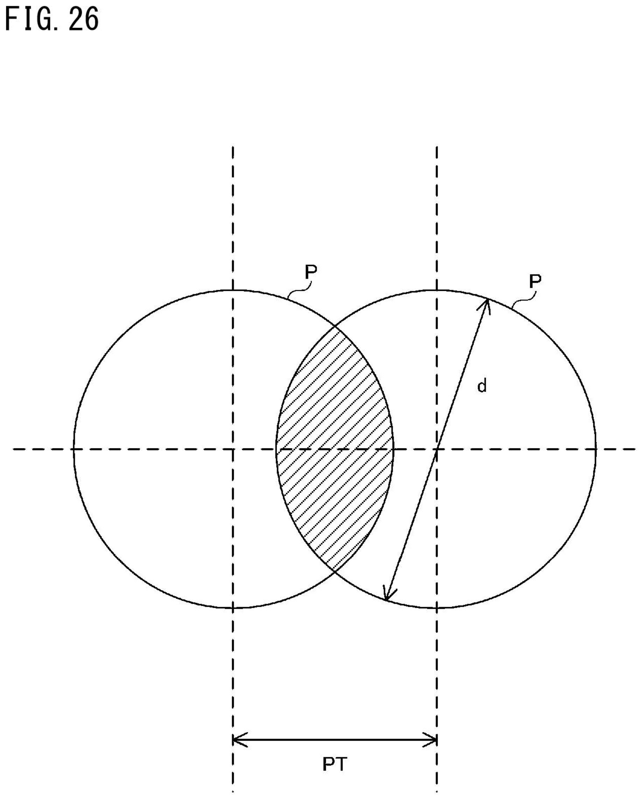

FIG. 26 is a schematic diagram showing a positional relationship between plots on a graph created by the creation unit in the processing device according to the embodiment of the present disclosure. FIG. 26 shows a positional relationship between two adjacent plots in FIG. 25. With reference to FIG. 26, the creation unit 120 creates a graph G in which at least a part of a plot P is disposed while overlapping another plot P in state where no abnormal vibration has occurred, i.e., in a state where only basic vibration has occurred. Here, it is assumed that the diameter of the plot P is d and the plots P are disposed at a constant pitch PT.

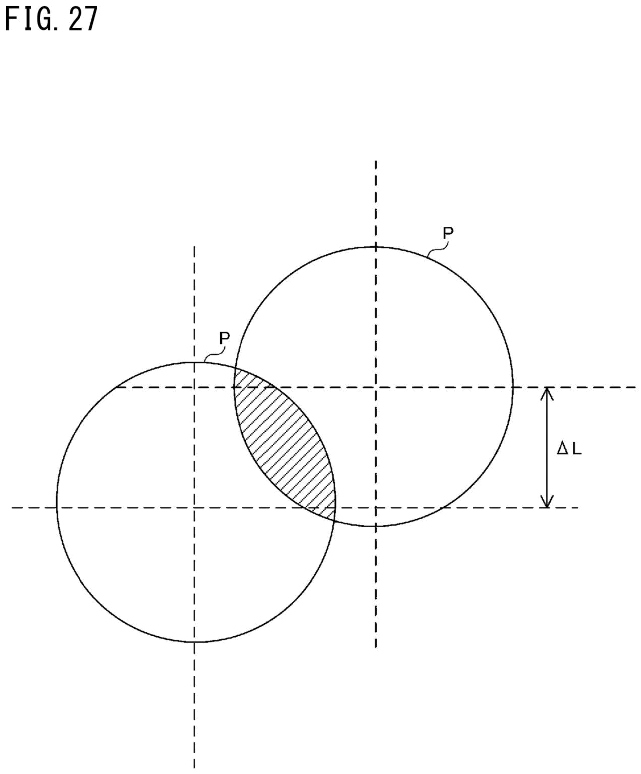

FIG. 27 is a schematic diagram showing a positional relationship between plots on a graph created by the creation unit in the processing device according to the embodiment of the present disclosure. FIG. 27 shows a positional relationship of the plots P in a state where abnormal vibration has occurred. With reference to FIG. 27, when the position of either one of two adjacent plots P has changed along the radial direction of the circle C1 due to occurrence of abnormal vibration, the region where the two plots P overlap is reduced, and thus, the area Ag occupied by the plots P in the graph G becomes large. Therefore, occurrence of abnormal vibration can be detected by using the area Ag as the evaluation value.

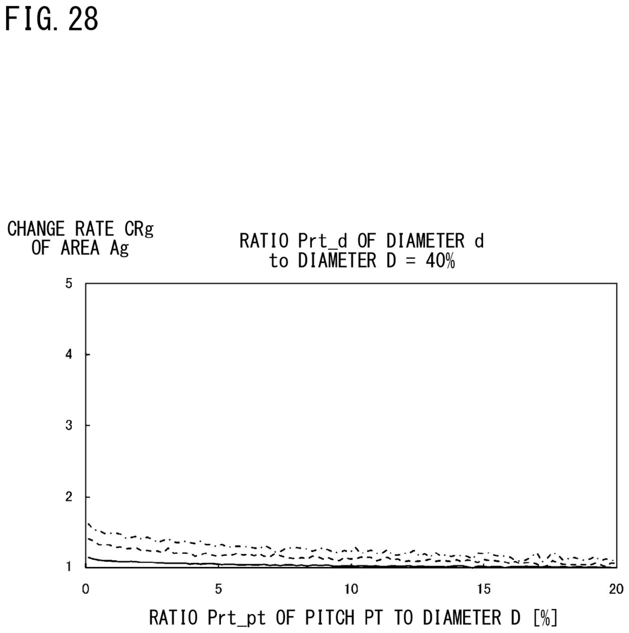

FIG. 28 to FIG. 30 each show a simulation result for describing a relationship between the detection accuracy and the pitch of plots included in a graph created by the processing device according to the embodiment of the present disclosure. In FIG. 28 to FIG. 30, the horizontal axis represents a ratio Prt_pt [%] of the pitch PT to a diameter D of the circle C1, and the vertical axis represents a change rate CRg of the area Ag relative to the case where the amplitude of abnormal vibration is zero. The solid line in FIG. 28 to FIG. 30 shows the change rate CRg in a state where random abnormal vibration in a normal distribution in which the standard deviation is 4% of the diameter D of the circle C1 has occurred. The broken line in FIG. 28 to FIG. 30 shows the change rate CRg in a state where random abnormal vibration in a normal distribution in which the standard deviation is 12% of the diameter D of the circle C1 has occurred. The alternate long and short dash line in FIG. 28 to FIG. 30 shows the change rate CRg in a state where random abnormal vibration in a normal distribution in which the standard deviation is 20% of the diameter D of the circle C1 has occurred.

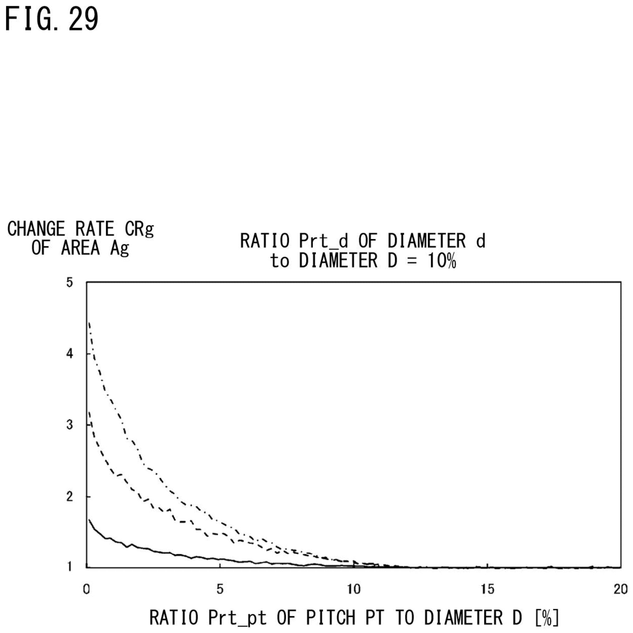

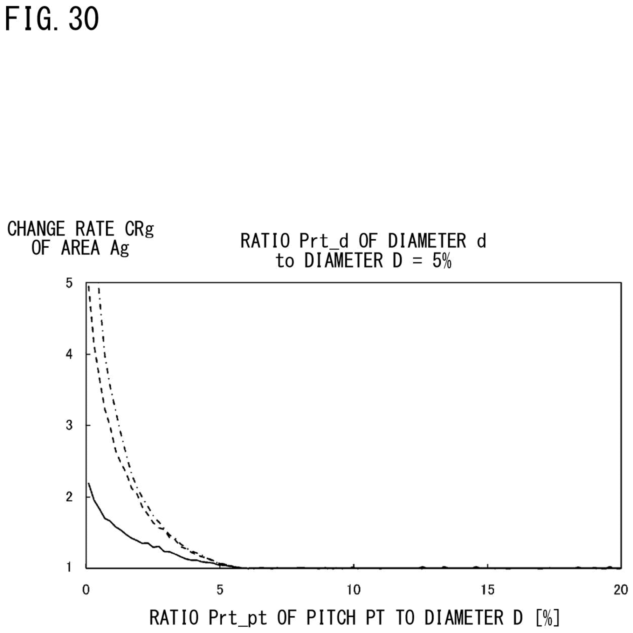

FIG. 28 shows a relationship between the ratio Prt_pt and the change rate CRg when a ratio Prt_d of a diameter d of the plot P to the diameter D of the circle C1 is 40%. FIG. 29 shows a relationship between the ratio Prt_pt and the change rate CRg when the ratio Prt_d of the diameter d of the plot P to the diameter D of the circle C1 is 10%. FIG. 30 shows a relationship between the ratio Prt_pt and the change rate CRg when the ratio Prt_d of the diameter d of the plot P to the diameter D of the circle C1 is 5%.

With reference to FIG. 28 to FIG. 30, the smaller the diameter d of the plot P is, the larger the change rate CRg is, in a region where the ratio Prt_pt of the pitch PT is small. Therefore, when the diameter d of the plot P is set to a small value and the pitch PT of the plot P is set to a small value, abnormal vibration can be detected with higher sensitivity. However, the smaller the pitch PT is, the larger the number of plots P necessary for the detection process becomes.

On the other hand, the larger the diameter d of the plot P is, the smaller the decrease ratio of the change rate CRg relative to increase in the ratio Prt_pt is. Therefore, when the diameter d of the plot P is set to a larger value, the degree of freedom of setting the pitch PT for detecting abnormal vibration is large. Therefore, when the pitch PT is set to a larger value, abnormal vibration can be detected while the number of plots P necessary for the detection process is suppressed.

For example, the creation unit 120 creates a graph G in which the size of the plot P is set in accordance with the pitch PT of the plot P. More specifically, the creation unit 120 acquires in advance the magnitude of basic vibration that occurs when a cutting process is performed by using the cutting tool 101. Next, the creation unit 120 acquires the magnitude of abnormal vibration, represented as the ratio to the magnitude of the basic vibration, that can occur when a cutting process is performed by using the cutting tool 101. Next, based on the simulation results from FIG. 28 to FIG. 30, for example, the creation unit 120 determines the ratio Prt_pt of the pitch PT and the ratio Prt_d of the diameter d that enable detection of abnormal vibration that can occur. Instead of determining the ratio Prt_pt of the pitch PT, the creation unit 120 may acquire the ratio Prt_pt of the pitch PT set in advance based on the machining condition and the like.

For example, the creation unit 120 creates a graph G including the plots P that have the diameter d being 5% or more of the maximum value of data based on measurement results from each strain sensor 20 acquired in advance before operation of the processing system 301, and being 20% or less of the maximum value of the data. More specifically, in a state where no abnormal vibration has occurred, the creation unit 120 generates the graph G including a plurality of plots P disposed on the circumference of the circle C1 having the radius R, for example, and sets the ratio Prt_d of the diameter d of the plot P to the diameter D of the circle C1 in a numerical range of 5% or more and 20% or less. By setting the ratio Prt_d in such a numerical range, it is possible to ensure the region where the plots P overlap in a state where no abnormal vibration has occurred, and when abnormal vibration has occurred, overlapping of the plots P is more assuredly reduced without the plots P protruding from the graph G. Therefore, abnormal vibration can be detected with higher sensitivity by using the evaluation value such as the area Ag.

### [Operation flow]

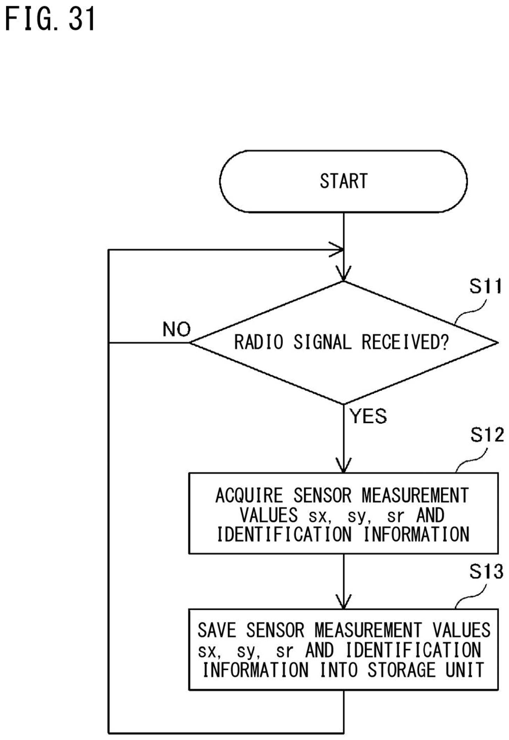

FIG. 31 is a flowchart of an example of the operation procedure when the processing device acquires sensor measurement values according to the embodiment of the present disclosure.

With reference to FIG. 31, first, after a cutting process has started, the processing device 201 waits for a radio signal from the wireless communication device 23 in the cutting tool 101 (NO in step S11), and when having received the radio signal (YES in step S11), acquires sensor measurement values sx, sy, sr and identification information from the received radio signal (step S12).

Next, the processing device 201 saves the acquired sensor measurement values sx, sy, sr and identification information into the storage unit 140 (step S13), and waits for a new radio signal from the wireless communication device 23 in the cutting tool 101 (NO in step S11).

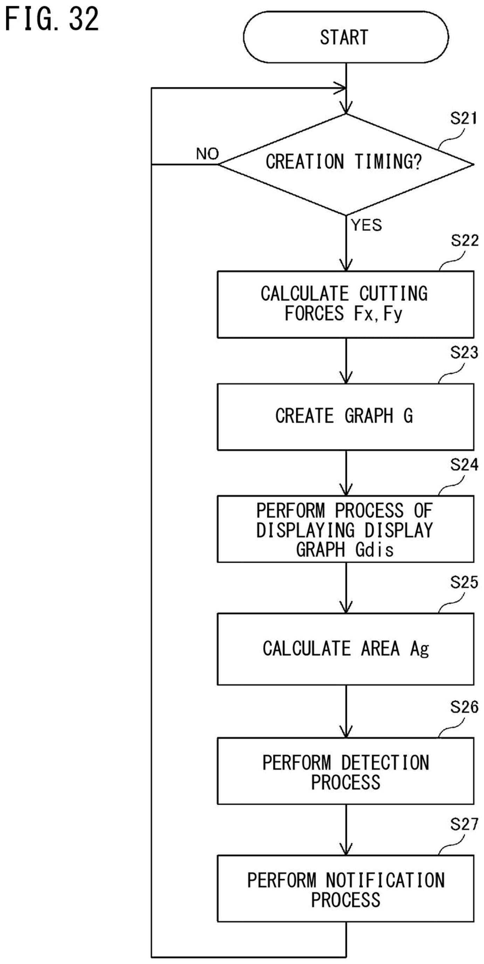

FIG. 32 is a flowchart of an example of the operation procedure when the processing device performs the detection process according to the embodiment of the present disclosure.

With reference to FIG. 32, first, the processing device 201 waits for a creation timing according to the creation cycle Pg (NO in step S21), and when the creation timing has arrived (YES in step S21), calculates the cutting forces Fx, Fy at each measurement time point in the target period T, based on a plurality of sensor measurement values sx, sy, sr in the target period T. The processing device 201 may calculate the moment Mx, My instead of the cutting forces Fx, Fy or in addition to the cutting forces Fx, Fy (step S22).

Next, the processing device 201 creates graphs G using the calculated cutting forces Fx, Fy (step S23).

Next, the processing device 201 performs a process of displaying, on a display (not shown), a display graph Gdis among the created graphs G (step S24).

Next, the processing device 201 calculates the area Ag occupied by a plurality of plots P in each created graph G (step S25).

Next, the processing device 201 performs the detection process by using the calculated area Ag as an evaluation value. More specifically, the processing device 201 compares the area Ag with the threshold ThA, and detects abnormal vibration, based on the comparison result (step S26).

Next, when having determined that abnormal vibration or chatter vibration due to wear of the cutting edge has occurred, the processing device 201 performs the notification process of notifying the user of the processing system 301 of the determination result (step S27).

Next, the processing device 201 waits for a new generation timing (NO in step S21).

Although the processing system 301 according to the embodiment of the present disclosure includes the strain sensor 20, the present disclosure is not limited thereto. The processing system 301 may be configured to include an acceleration sensor, instead of the strain sensor 20. The acceleration sensor measures acceleration in vibration of the shaft part 10, as a physical quantity indicating a state regarding loading on the cutting tool 101 during a cutting process. In this case, the creation unit 120 in the processing device 201 creates the graph G, based on the measurement result from the acceleration sensor. The strain sensor 20 can detect deformation of the cutting tool 101 that affects machining accuracy, as compared with the acceleration sensor. On the other hand, the acceleration sensor can detect smaller vibration of the cutting tool 101, as compared with the strain sensor 20.

In the processing device 201 according to the embodiment of the present disclosure, the creation unit 120 creates the graph G in which the size of the plot P is set in accordance with the pitch PT of the plot P, but the present disclosure is not limited thereto. The creation unit 120 may be configured to create the graph G including the plots P that have a size set irrespective of the pitch PT.

In the processing device 201 according to the embodiment of the present disclosure, the creation unit 120 sets the ratio Prt_d of the diameter d of the plot P to the diameter D of the circle C1 in a numerical range of 5% or more and 20% or less, but the present disclosure is not limited thereto. The creation unit 120 may be configured to set the ratio Prt_d to a value outside the numerical range.

In the processing device 201 according to the embodiment of the present disclosure, the creation unit 120 creates the graph G, based on measurement results from the strain sensor 20 at a plurality of measurement time points in a period necessary for the cutting tool 101 to rotate a plurality of times, but the present disclosure is not limited thereto. The creation unit 120 may be configured to create the graph G, based on measurement results from the strain sensor 20 at a plurality of measurement time points in the period necessary for the cutting tool 101 to rotate once.

In the processing device 201 according to the embodiment of the present disclosure, the creation unit 120 creates a plurality of graphs Gb respectively having different diameters of the plot Pb, by using the same cutting forces Fx, Fy calculated based on the same sensor measurement values sx, sy, sr, but the present disclosure is not limited thereto. The creation unit 120 may be configured to create only one graph G by using the same cutting forces Fx, Fy calculated based on the same sensor measurement values sx, sy, sr.

In the processing device 201 according to the embodiment of the present disclosure, when graph information has been saved in the storage unit 140 by the creation unit 120, the detection unit 130 performs a process of displaying, on a display (not shown), the display graph Gdis included in the graph information, but the present disclosure is not limited thereto. The detection unit 130 may be configured not to perform the process of displaying the graph G such as the display graph Gdis.

In the processing device 201 according to the embodiment of the present disclosure, the detection unit 130 detects the state of a cutting process using the cutting tool 101, based on the area Ag occupied by a plurality of plots P in each of a plurality of graphs G respectively having different sizes of the plot P, but the present disclosure is not limited thereto. The detection unit 130 may be configured to detect the state of a cutting process using the cutting tool 101, based on the area Ag occupied by a plurality of plots P in one graph G.

In the processing device 201 according to the embodiment of the present disclosure, the creation unit 120 creates the graphs Ga, Gc in time series, and the graphs Gb, Gd, but the present disclosure is not limited thereto. The creation unit 120 may be configured to create the graphs Ga, Gc and not to create the graphs Gb, Gd. Alternatively, the creation unit 120 may be configured to create the graphs Gb, Gd and not to create the graphs Ga, Gc.

The processing system 301 according to the embodiment of the present disclosure includes the cutting tool 101 that is used in milling, but the present disclosure is not limited thereto. The processing system 301 may be configured to include a generative tool that is used in generative tool machining, instead of the cutting tool 101.

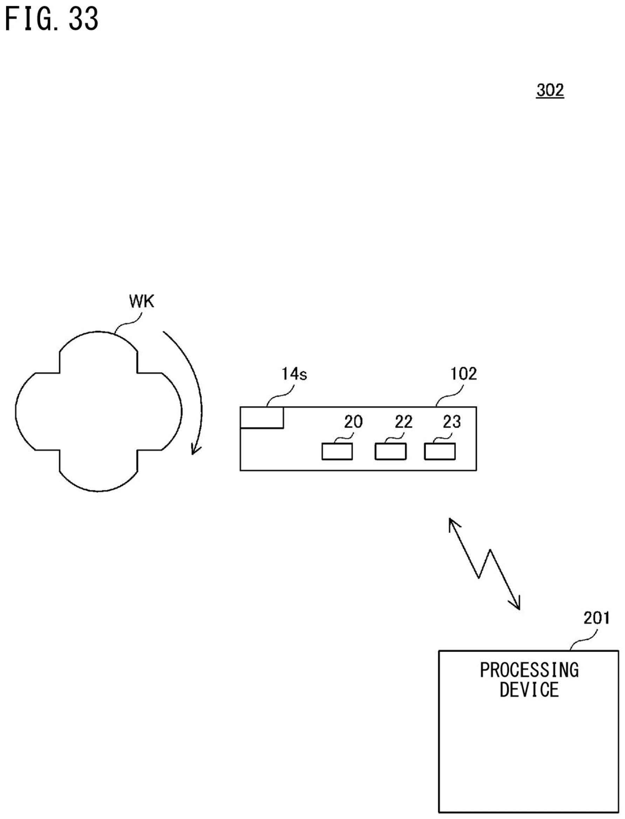

FIG. 33 shows a configuration of a processing system according to a modification of the embodiment of the present disclosure. With reference to FIG. 33, a processing system 302 includes a cutting tool 102 instead of the cutting tool 101, as compared with the processing system 301. The cutting tool 102 is used in turning of a workpiece WK. For example, the workpiece WK is a metal in a circular column shape having a groove on the outer peripheral surface thereof. An insert 14s is mounted to the cutting tool 102. The cutting tool 102 performs intermittent machining on the outer peripheral surface of the workpiece WK that is rotating.

The wireless communication unit 110 in the processing device 201 acquires sensor measurement values sx, sy, sr and identification information from a radio signal received from the wireless communication device 23 in the cutting tool 102. Then, the wireless communication unit 110 saves the sensor measurement values sx, sy, sr into the storage unit 140 in association with the identification information.

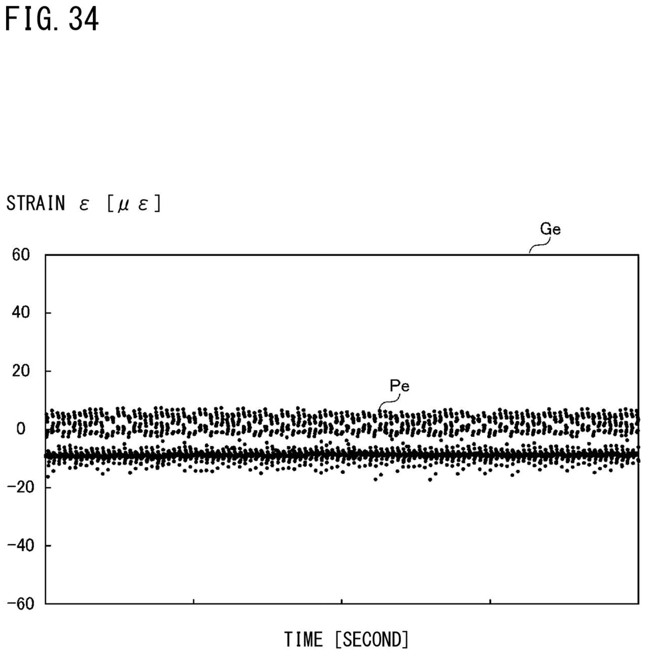

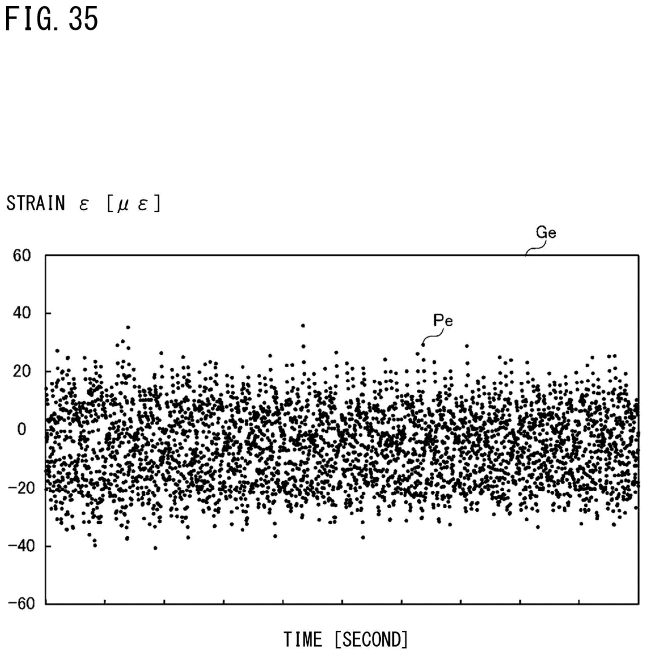

FIG. 34 and FIG. 35 each show an example of a graph created by the creation unit in the processing device according to the embodiment of the present disclosure. FIG. 34 and FIG. 35 each show a graph Ge created by the creation unit 120 when a cutting process has been performed under a predetermined machining condition Wc4 by using a cutting tool 103. In the graph Ge, the horizontal axis represents time [second], and the vertical axis represents strain ε [µε]. The strain ε is correlated with the cutting force F. FIG. 34 shows the graph Ge in a state where no chatter vibration of the cutting tool 102 has occurred, and FIG. 35 shows the graph Ge in a state where chatter vibration of the cutting tool 102 has occurred.

With reference to FIG. 34 and FIG. 35, the creation unit 120 creates the graph Ge being the graph G in time series including a plurality of plots Pe indicating a correspondence relationship between the measurement time point and the strain ε. The plot Pe is an example of the plot P. For example, the shape of the plot Pe is circular. The shape of the plot Pe may be a shape other than a circular shape such as a quadrangle or a triangle. For example, the creation unit 120 creates the graph Ge, based on measurement results from the strain sensor 20 at a plurality of measurement time points in a period necessary for the workpiece WK to rotate a plurality of times.

Here, in the graph Ge in a state where chatter vibration has occurred, the absolute value of the strain ε is larger than that in the graph Ge in a state where no chatter vibration has occurred. This is because, in a state where chatter vibration has occurred, the chatter vibration being abnormal vibration is added to basic vibration being normal vibration caused by engagement and disengagement of the cutting edge with respect to the workpiece. In the chatter vibration, as compared with the basic vibration, the frequency is high, and the amplitude is small at the initial stage of occurrence of chatter vibration. In the graph Ge in a state where chatter vibration has occurred, the area Ag occupied by the plots Pe is larger than that in the graph Ge in a state where no chatter vibration has occurred. This is because, in the graph Ge in a state where chatter vibration has occurred, the range of the value that the strain ε can take is larger than that in the graph Ge in a state where no chatter vibration has occurred, and thus, overlapping of a plurality of plots Pe is reduced.

When a graph Ge in the target period T has been saved in the storage unit 140 by the creation unit 120, the detection unit 130 acquires the graph Ge from the storage unit 140. The detection unit 130 generates a binary image in which the region occupied by the plots Pe in the acquired graph Ge is black and the region where no plots Pe are present in the graph Ge is white. The detection unit 130 calculates, as the area Ag, the number of pixels of the black region in the generated binary image. When having calculated the area Ag, the detection unit 130 performs the detection process by using the calculated area Ag as the evaluation value.

Meanwhile, a technology that can more accurately detect the state of a cutting process using a cutting tool is desired. More specifically, in general, normal vibration is larger than abnormal vibration, and the magnitude of abnormal vibration is difficult to be reflected in the standard deviation of the measurement result from a sensor. Therefore, it is not easy to detect the state of a cutting process by using the standard deviation as an evaluation value. In a case where vibration components of abnormal vibration are extracted by using Fourier transform, a processing device having a high sampling frequency is required. With an approach of analyzing the envelope of a graph, it is difficult to detect abnormal vibration.

In contrast, the processing system 301 according to the embodiment of the present disclosure includes the cutting tool, the strain sensor 20, and the processing device 201. The strain sensor 20 measures a physical quantity indicating a state regarding loading on the cutting tool 101 during a cutting process. Based on measurement results from the strain sensor 20 at a plurality of measurement time points, the processing device 201 creates a graph G including a plurality of plots P each indicating data regarding the loading at a corresponding measurement time point, and detects the state of the cutting process using the cutting tool 101, based on the area occupied by the plurality of plots P in the created G graph.

Thus, with the configuration in which the state of a cutting process is detected based on the area Ag occupied by the plurality of plots P in the graph G created based on measurement results from the strain sensor 20, change in the positions of the plots P due to occurrence of abnormal vibration can be detected as change in the area Ag occupied by the plurality of plots P in the graph G, whereby abnormal vibration can be detected based on the change in the area Ag. In the area Ag occupied by the plurality of plots P in the graph G, change in the amplitude of abnormal vibration is easily reflected as compared with the standard deviation or the like of measurement results from the strain sensor 20, and thus, change in the amplitude of the abnormal vibration can be detected with higher sensitivity by using the area Ag as an evaluation value. Therefore, the state of a cutting process using the cutting tool 101 can be more accurately detected.

The disclosed embodiment is merely illustrative in all aspects and should not be recognized as being restrictive. The scope of the present disclosure is defined by the scope of the claims rather than by the description above, and is intended to include meaning equivalent to the scope of the claims and all modifications within the scope.

Each process (each function) of the embodiment described above is realized by processing circuitry including one or a plurality of processors. The above processing circuitry may be configured as an integrated circuit or the like in which one or a plurality of memories, various analog circuits, and various digital circuits are combined, in addition to the one or the plurality of processors. The one or the plurality of memories have stored therein a program (command) that causes the one or the plurality of processors to execute the above processes. The one or the plurality of processors may execute the above processes according to the program that is read from the one or the plurality of memories, or may execute the above processes according to a logic circuit that is designed in advance to execute the above processes. The processors may be various processors conforming to control of a computer, such as a CPU (Central Processing unit), a GPU (Graphics Processing unit), a DSP (Digital Signal Processor), an FPGA (Field Programmable Gate Array), and an ASIC (Application Specific Integrated Circuit). The plurality of processors physically separated from each other may execute the above processes in cooperation with each other. For example, the processors respectively installed in a plurality of physically separated computers may execute the above processes in cooperation with each other via a network such as a LAN (Local Area Network), a WAN (Wide Area Network), and the Internet. The program may be installed in the memories via the network from an external server device or the like, or may be distributed in a state of being stored in a storage medium such as a CD-ROM (Compact Disc Read Only Memory), a DVD-ROM (Digital Versatile Disk Read Only Memory), or a semiconductor memory, and may be installed in the memories from the storage medium.

The above description includes the features in the additional note below.

### [Additional note 1]

A processing system comprising:
a cutting tool;
a sensor; and
a processing unit, wherein
the sensor measures a physical quantity indicating a state regarding loading on the cutting tool during a cutting process,
based on measurement results from the sensor at a plurality of measurement time points, the processing unit creates a graph including a plurality of plots each indicating data regarding the loading at a corresponding one of the measurement time points, and performs a detection process of detecting a state of the cutting process using the cutting tool, based on an area occupied by the plurality of plots in the created graph, and
the processing unit executes, in the detection process, at least one of detection of abnormal vibration due to wear of a cutting edge of the cutting tool, detection of chatter vibration, detection of abnormal vibration due to chipping of the cutting edge, and determination of life of the cutting tool.

### REFERENCE SIGNS LIST

10 shaft part
11 shank part
12 insert mounting part
13 insert fixation part
14, 14s insert
17 rotation axis
18 cutting-force-acting surface
20, 20A, 20B, 20C strain sensor
22 battery
23 wireless communication device
24 housing
101, 102 cutting tool
110 wireless communication unit
120 creation unit
130 detection unit
140 storage unit
201 processing device
210 tool holder
220 main shaft
301, 302 processing system
G, Ga, Gb, Gd, Ge graph
P, Pa, Pb, Pd, Pe plot
ThA1 threshold
C1 circle
R radius
d diameter
PT pitch
WK workpiece

## Claims

1. A processing system comprising:
a cutting tool;
a sensor; and
a processing unit, wherein
the sensor measures a physical quantity indicating a state regarding loading on the cutting tool during a cutting process, and
based on measurement results from the sensor at a plurality of measurement time points, the processing unit creates a graph including a plurality of plots each indicating data regarding the loading at a corresponding one of the measurement time points, and detects a state of the cutting process using the cutting tool, based on an area occupied by the plurality of plots in the created graph.

2. The processing system according to claim 1, wherein
the processing unit creates the graph in which a size of the plot is set in accordance with a pitch of the plot.

3. The processing system according to claim 2, wherein
the processing unit creates the graph including the plots having a diameter being 5% or more of a maximum value of the data based on measurement results from the sensor acquired in advance before operation of the processing system, the diameter being 20% or less of the maximum value of the data.

4. The processing system according to any one of claims 1 to 3, wherein
the processing unit creates the graph, based on measurement results from the sensor at the plurality of measurement time points in a period necessary for the cutting tool or a workpiece to rotate a plurality of times.

5. The processing system according to any one of claims 1 to 4, wherein
the processing unit creates a plurality of the graphs respectively having different sizes of the plot.

6. The processing system according to claim 5, wherein
the processing unit performs a process of selectively displaying at least one of the plurality of graphs.

7. The processing system according to claim 5 or 6, wherein
the processing unit detects the state of the cutting process using the cutting tool, based on an area occupied by the plurality of plots in each of the plurality of graphs.

8. The processing system according to any one of claims 1 to 7, wherein
the processing unit creates the graph in time series including the plurality of plots indicating a correspondence relationship between the measurement time point and the data.

9. The processing system according to any one of claims 1 to 7, wherein
the processing system comprises a plurality of the sensors, and
based on measurement results from each sensor at the plurality of measurement time points, the processing unit creates the graph including the plurality of plots each indicating a correspondence relationship of the data regarding the loading in two directions in a plane perpendicular to a rotation axis of the cutting tool at a corresponding one of the measurement time points.

10. The processing system according to any one of claims 1 to 9, wherein
the sensor is a strain sensor or an acceleration sensor.

11. A processing device comprising:
a measurement result acquisition unit configured to acquire a measurement result of a physical quantity indicating a state regarding loading on a cutting tool during a cutting process, the measurement result being from a sensor;
a creation unit configured to create, based on the measurement result, from the sensor at each of a plurality of measurement time points, that has been acquired by the measurement result acquisition unit, a graph including a plurality of plots each indicating data regarding the loading at a corresponding one of the measurement time points; and
a detection unit configured to detect a state of the cutting process using the cutting tool, based on an area occupied by the plurality of plots in the graph created by the creation unit.

12. A processing method performed in a processing device, the processing method comprising:
a step of acquiring a measurement result of a physical quantity indicating a state regarding loading on a cutting tool during a cutting process, the measurement result being from a sensor;
a step of creating, based on the acquired measurement result from the sensor at each of a plurality of measurement time points, a graph including a plurality of plots each indicating data regarding the loading at a corresponding one of the measurement time points; and
a step of detecting a state of the cutting process using the cutting tool, based on an area occupied by the plurality of plots in the created graph.

13. A processing program used in a processing device, the processing program causing a computer to function as:
a measurement result acquisition unit configured to acquire a measurement result of a physical quantity indicating a state regarding loading on a cutting tool during a cutting process, the measurement result being from a sensor;
a creation unit configured to create, based on the measurement result, from the sensor at each of a plurality of measurement time points, that has been acquired by the measurement result acquisition unit, a graph including a plurality of plots each indicating data regarding the loading at a corresponding one of the measurement time points; and
a detection unit configured to detect a state of the cutting process using the cutting tool, based on an area occupied by the plurality of plots in the graph created by the creation unit.
